# EUROPÄISCHE PATENTSCHRIFT

(11) **EP 2 991 815 B1**
(45) Veröffentlichungstag und Bekanntmachung des Hinweises auf die Patenterteilung: **21.08.2019**
(21) Anmeldenummer: 14720154.5
(22) Anmeldetag: 30.04.2014
(51) Int. Cl.: B29C 48/30, B29C 48/92, B29C 48/15, B29C 49/78, B29C 49/00

(54) **VERFAHREN UND VORRICHTUNG ZUR HERSTELLUNG EINES DOPPELLAGIGEN WELLROHRES MIT ROHRMUFFE**
METHOD AND DEVICE FOR PRODUCING A DOUBLE-LAYER CORRUGATED PIPE HAVING A CONNECTING SLEEVE
PROCÉDÉ ET DISPOSITIF DE FABRICATION D'UN TUBE ONDULÉ BICOUCHE POURVU D'UN MANCHON TUBULAIRE

(30) Priorität: 03.05.2013 DE 102013007530
(43) Veröffentlichungstag der Anmeldung: 09.03.2016
(73) Patentinhaber: UNICOR GmbH, 97437 Hassfurt (DE)
(72) Erfinder: KOSSNER, Hubert, 97523 Schwanfeld (DE)
(74) Vertreter: Louis Pöhlau Lohrentz
(86) Internationale Anmeldenummer: PCT/EP2014/058823
(87) Internationale Veröffentlichungsnummer: WO 2014/177613

(56) Entgegenhaltungen:
- WO-A1-02/070238
- WO-A1-2005/009720
- WO-A2-2009/053009
- DE-A1- 10 110 064
- DE-A1- 19 724 113
- DE-U1-202008 018 223
- FR-A1- 2 718 509

## Beschreibung

Die Erfindung betrifft ein Verfahren und eine Vorrichtung zur Herstellung eines doppelwandigen aus vorzugsweise thermoplastischem Kunststoff bestehenden Wellrohres mit Rohrmuffe.

Aus der EP 0 563 575 B1 ist ein solches Verfahren mit zugehöriger Vorrichtung bekannt. Bei dem Wellrohr handelt es sich um ein Verbundwellrohr bestehend aus einem glatten Innenrohr und einem gewellten Außenrohr, das im Bereich seiner Wellentäler mit dem Innenrohr verschweißt ist. Das Verbundrohr weist einen Muffenabschnitt auf, in welchem das Außenrohr eine glatte zylindrische oder leicht konische Muffenausformung aufweist, und auch das Muffeninnenrohr einen entsprechenden glatten zylindrischen oder leicht konischen Muffenabschnitt hat, der an der Innenseite der Muffenausformung des Außenrohrs anliegt und dort verschweißt ist. Die Herstellung dieses Muffenrohrs erfolgt fortlaufend, indem ein doppelwandiges Endlosrohr mit aufeinander folgenden Wellrohrabschnitten und Muffenausformungen erzeugt wird. Das Endlosrohr wird abgelängt, um so das Muffenrohr bestehend aus einem Wellrohrabschnitt und einem Muffenabschnitt herzustellen.

Die Fertigung des Endlosrohres erfolgt dadurch, daß über einen Spritzkopf einer Extrusionsvorrichtung ein doppelwandiger Kunststoffschmelzeschlauch extrudiert wird, indem aus einer ersten Düse ein Außenschlauch extrudiert wird und über eine nachgeschaltete zweite Düse des Spritzkopfs ein Innenschlauch konzentrisch in den Außenschlauch hinein extrudiert wird. Die Ausformung der Wellen und Muffenabschnitte erfolgt in einem dem Spritzkopf nachgeschalteten Korrugator, d. h. in dessen Formkanal, der durch umlaufende Formbackenpaare aufeinander folgende gewellte und zylindrische oder leicht konische Formflächen aufweist.

Bei der Ausformung des Außenschlauchs und des Innenschlauchs in dem Formkanal des Korrugators gemäß dem Verfahren wie es in der EP 0 563 575 B1 beschrieben ist, erfordert es eine komplexe Steuerung der auf den Innenschlauch und den Außenschlauch einwirkenden Drücke. Die Drücke müssen jeweils sehr genau auf den jeweiligen Formvorgang des Außen- und Innenschlauchs abgestimmt werden. Da die Aufweitung des Außenschlauchs und die Aufweitung des Innenschlauchs zeitlich versetzt eingeleitet und aber überlappend gleichzeitig verlaufen, ist die Abstimmung der auf den Innenschlauch und auf den Außenschlauch einzuwirkenden unterschiedlichen Drücke hinsichtlich ihrer zeitlichen Folge und hinsichtlich der Höhe der Drücke sehr aufwendig.

Entsprechendes gilt für das in der WO 02/070 238 A1 und in der DE 103 35 518 A1 beschriebene Herstellungsverfahren und Vorrichtung. Auch dort ist die Abstimmung der auf den Innenschlauch und Außenschlauch gleichzeitig einwirkenden unterschiedlichen Drücke sehr aufwendig.

Aus der WO 2009/053 009A2 ist ein Verfahren zur Herstellung eines endlosen doppelwandigen aus vorzugsweise thermoplastischem Kunststoffmaterial bestehenden Rohres mit Wellrohrabschnitten und Muffenrohrabschnitten, durch Extrusion eines das Außenrohr des doppelwandigen Rohres bildenden Außenschlauchs und eines das Innenrohr des doppelwandigen Rohres bildenden Innenschlauchs in einem Formkanal mit mindestens einem Abschnitt mit gewellter Formfläche und mindestens einem Abschnitt mit vorzugsweise glatter, zylindrischer oder leicht konischer Muffenformfläche, bekannt, wobei vorgesehen ist, dass zur Ausformung eines Wellrohrabschnitts der Außenschlauch in die gewellte Formfläche extrudiert wird und an der gewellten Formfläche zur Anlage gebracht wird, und der Innenschlauch in den Außenschlauch extrudiert wird und an den an der gewellten Formfläche anliegenden Außenschlauch im Bereich der Wellentäler des Außenschlauchs zur Anlage gebracht wird, und dass zur Ausformung eines Muffenabschnitts zuerst der Außenschlauch in die Muffenformfläche extrudiert wird und an der Muffenformfläche über die gesamte axiale Länge der Muffenformfläche zur Anlage gebracht wird und erst dann der Innenschlauch in den bereits über die gesamte axiale Länge der Muffenformfläche in Anlage liegenden Außenschlauch extrudiert wird und dabei an der Innenseite des genannten an der Muffenformfläche bereits über die gesamte axiale Länge der Muffenformfläche in Anlage liegenden Außenschlauch zur Anlage gebracht wird.

Die Muffenausformung erfolgt anders als bei dem vorangehend zitierten Stand der Technik. Sie erfolgt dahingehend, dass die Muffenausformung des Außenschlauchs und die Muffenausformung des Innenschlauchs zeitlich nicht überlappend erfolgen, sondern in separaten zeitlich nacheinander laufenden Phasen. Das heißt die Muffenausformung erfolgt in zwei Phasen. In der ersten Phase wird der Außenschlauch in die Muffenformfläche extrudiert und dort über die gesamte axiale Länge der Muffenformfläche zur Anlage gebracht. In der zweiten Phase wird der Innenschlauch in die bereits über die gesamte axiale Länge der Muffenformfläche anliegende Muffenausformung des Außenschlauchs extrudiert wird. Es wird damit eine besonders einfache Drucksteuerung möglich, da die Muffenausformung des Außenschlauchs und die Muffenausformung des Innenschlauchs zeitlich hintereinander unabhängig voneinander erfolgen.

Des Weiteren wird auf die Dokumente FR 2 718 509 A1, DE 20 2008 018223 U1 und DE 101 10 064 A1 verwiesen.

Der Erfindung liegt die Aufgabe zugrunde, ein Verfahren und eine Vorrichtung der vorangehend genannten Art weiter zu entwickeln mit dem Ziel, eine besonders sichere Verfahrensführung mit möglichst gut abgestimmten Verfahrensschritten der Muffenausbildung von Außenschlauch und Innenschlauch im Sinne einer besonders exakten Muffenausformung zu erhalten.

Die Erfindung löst diese Aufgabe jeweils mit einem Verfahren gemäß den unabhängigen Verfahrensansprüchen 1 und 2 und einer Vorrichtung gemäß den unabhängigen Vorrichtungsansprüchen 19 und 20. Vorteilhafte Ausführungsformen sind in den abhängigen Ansprüchen dargelegt.

Das erfindungsgemäße Verfahren sieht vor, dass der auf der Innenseite des Außenschlauchs einwirkende Druck gesteuert wird in einem Ablauf von Schritten a1 bis a4 und dass der auf die Innenseite des Innenschlauchs einwirkende Druck gesteuert wird durch eine Abfolge von Schritten b1 bis b3. Es sei betont, dass die Schritte a1 bis a4 in der genannten zeitlichen Reihenfolge, d. h. in der Reihenfolge a1, a2, a3, a4 nacheinander laufen, wobei die Schritte jedoch nicht jeweils unmittelbar aufeinander folgen müssen, sondern auch ein oder mehrere Zwischenschritte erfolgen können. Entsprechendes gilt für die Schritte b1 bis b3. Ferner sei betont, dass die Reihenfolge der Schritte a1 bis a4 jeweils nur gilt für die die Ausformung des Außenschlauchs betreffenden Schritte a1 bis a4 und dass die Reihenfolge der Schritte b1 bis b3 nur gilt für die die Ausformung des Innenschlauchs betreffenden Schritte b1 bis b3. Das heißt, die Schritte der Außenschlauchausformung a1 bis a4 laufen gegenüber den Schritten der Innenschlauchausformung zeitlich zum Teil gleichzeitig und überlappend.

Diese genannten Schritte der Außenschlauchausformung und der Innenschlauchausformung bilden eine wesentliche Spezifizierung der erfindungsgemäßen Lösung.

Was die Außenschlauchausformung durch die Druckführung des auf die Innenseite des Außenschlauchs einwirkenden Drucks pa betrifft, gilt, dass der auf die Innenseite des Außenschlauchs einwirkende Druck wie folgt gesteuert und/oder geregelt wird:
Schritt a1 sieht vor, dass kurz bevor oder zu Beginn der Extrusion des Außenschlauchs in die Muffenformfläche der auf die Innenseite des Außenschlauchs einwirkende Druck reduziert wird.
Schritt a2 sieht vor, dass während der Extrusion des Außenschlauchs in die Muffenformfläche der auf die Innenseite des Außenschlauchs einwirkende Druck derart variiert oder konstant gesteuert wird, dass er zumindest über den überwiegenden Teil der Zeitdauer der Extrusion des Außenschlauchs in die Muffenformfläche über Atmosphärendruck liegt.
Schritt a3 sieht vor, dass nachdem die Extrusion des Außenschlauchs in die Muffenformfläche beendet ist, und zwar bevor oder zu Beginn der Extrusion des Innenschlauchs in den an der Muffenformfläche bereits anliegenden Außenschlauch der auf die Innenseite des Außenschlauchs einwirkende Druck auf Atmosphärendruck oder auf einen Druck, der in einem Bereich geringfügig über Atmosphärendruck liegt, reduziert wird.
Schritt a4 sieht vor, dass während der Extrusion des Innenschlauchs in den an der Muffenformfläche bereits anliegenden Außenschlauch der auf die Innenseite des Außenschlauchs einwirkende Druck zumindest über den überwiegenden Teil des Zeitraums der Extrusion des Innenschlauchs in den an der Muffenformfläche bereits anliegenden Außenschlauch auf Atmosphärendruck oder auf einen konstanten oder variablen Druck, der in einem Bereich geringfügig über Atmosphärendruck liegt, gehalten wird.

Was die Innenschlauchausformung durch die Druckführung des auf die Innenseite des Innenschlauchs einwirkenden Drucks pi betrifft, gilt, dass der auf die Innenseite des Innenschlauchs einwirkende Druck wie folgt gesteuert und/oder geregelt wird:
Schritt b1 sieht vor, dass kurz bevor oder zu Beginn der Extrusion des Innenschlauchs in den an der Muffenformfläche bereits anliegenden Außenschlauch der auf die Innenseite des Innenschlauchs einwirkende Druck erhöht wird auf einen Druck über Atmosphärendruck.
Schritt b2 sieht vor, dass während der Extrusion des Innenschlauchs in den an der Muffenformfläche bereits anliegenden Außenschlauch der auf die Innenseite des Innenschlauchs einwirkende Druck auf Überatmosphärendruck gehalten wird.
Schritt b3 sieht vor, dass nachdem die Extrusion des Innenschlauchs in den an der Muffenformfläche bereits anliegenden Außenschlauch beendet ist oder kurz davor der auf die Innenseite des Innenschlauchs einwirkende Druck reduziert wird auf Atmosphärendruck oder einen Druck über Atmosphärendruck.

Wesentlich bei dem erfindungsgemäßen Verfahren sind diese genannten Schritte a1 bis a4 und b1 bis b3. Die einzelnen Schritte können für eine besonders vorteilhafte Verfahrensführung weiter wie folgt spezifiziert werden, wie folgt.

Was die Drucksteuerung des auf die Innenseite des Außenschlauchs einwirkenden Drucks mit Schritt a2 während der Extrusion des Außenschlauchs in die Muffenformfläche betrifft, kann für eine besonders zuverlässige flächige Anlage des Außenschlauchs in dem zylindrischen oder konischen Längenabschnitt der Muffe und zum Erreichen einer optimalen Wanddicke vorgesehen sein, dass der in Schritt a2 auf die Innenseite des Außenschlauchs einwirkende Druck während dem der Außenschlauch Sa in den zylindrischen oder konischen Längenabschnitt der Muffenformfläche extrudiert wird, jeweils kleiner ist als ein Druck, der auf die Innenseite des Außenschlauchs als konstanter Druckwert oder als Druckmittelwert einwirkt während der Wellenausformung des Außenschlauchs, die der Muffenausformung des Außenschlauchs vorangeht.

Alternativ oder hierzu zusätzlich kann für die besonders zuverlässige flächige Anlage im zylindrischen oder konischen Längenabschnitt der Muffenformfläche auch vorgesehen sein, dass der in Schritt a2 auf die Innenseite des Außenschlauchs einwirkende Druck während dem der Außenschlauch in den zylindrischen oder konischen Längenabschnitt der Muffenformfläche extrudiert wird, alternierend ist zwischen einem oberen Druckwert und einem unteren Druckwert.

Was die genannten oberen und unteren Druckwerte betrifft, kann vorgesehen sein, dass der obere Druckwert kleiner oder gleich ist einem Druckwert PA1, der auf die Innenseite des Außenschlauchs als konstanter Druckwert oder als Druckmittelwert einwirkt während der Wellenausformung des Außenschlauchs, die der Muffenausformung des Außenschlauchs unmittelbar vorangeht.
Was den unteren Druckwert betrifft, kann vorgesehen sein, dass der untere Druckwert größer oder gleich Atmosphärendruck ist.

Um eine besonders zuverlässige flächige Anlage des Außenschlauchs im vorderen Muffenbereich unter Erreichen einer optimalen Wanddicke, d. h. im Flankenbereich und/oder in dem daran anschließenden abgerundeten Radiusbereich der Muffenformfläche zu erhalten, kann vorgesehen sein, dass der in Schritt a2 auf die Innenseite des Außenschlauchs einwirkende Druck erhöht wird, und zwar kurzzeitig nach der Extrusion des Außenschlauchs in die vordere Flanke des Übergangsbereichs der Muffenformfläche und/oder kurzzeitig vor oder während der Extrusion des Außenschlauchs in den dem zylindrischen Längenabschnitt der Muffenformfläche vorgeschalteten abgerundeten Radiusbereich. Vorzugsweise kann hierfür vorgesehen sein, dass diese Erhöhung des auf die Innenseite des Außenschlauchs einwirkenden Drucks auf einen Druck erfolgt, der größer oder gleich ist einem Druckwert PA1, der auf die Innenseite des Außenschlauchs als konstanter Druckwert oder als Druckmittelwert einwirkt, und zwar während der Wellenausformung des Außenschlauchs, die der Muffenausformung vorangeht.

Um eine flächige hintere Flankenausbildung der Muffenausformung des Außenschlauchs zu erhalten und ein möglichst glattes Innenschlauchrohr im Bereich der in Produktionsrichtung vor der Außenschlauchmuffe liegenden Wellen zu erreichen, kann vorgesehen sein, dass der in Schritt a2 auf die Innenseite des Außenschlauchs einwirkende Druck erhöht wird, und zwar kurzzeitig vor oder während oder kurzzeitig nach der Extrusion des Außenschlauchs in die hintere Flanke der Muffenformfläche. In bevorzugter Weiterbildung kann vorgesehen sein, dass diese Erhöhung des auf die Innenseite des Außenschlauchs Sa einwirkenden Drucks pa auf einen Druck erfolgt, der höher oder gleich ist einem Druckwert PA1, der auf die Innenseite des Außenschlauchs als konstanter Druckwert oder als Druckmittelwert einwirkt während der Wellenausformung des Außenschlauchs, die der Muffenausformung des Außenschlauchs vorangeht.

Um ein glattes Innenschlauchrohr im Bereich der in Produktionsrichtung vor der Außenschlauchmuffe ausgeformten Wellen zu erreichen und um eine besonders gute Stabilisierung der Muffenausformung des Außenschlauchs zu erhalten, kann vorgesehen sein, dass - nach Beendigung der in Schritt a2 erfolgten Extrusion des Außenschlauchs in die Muffenformfläche, jedoch noch bevor der Innenschlauch in den an der Muffenformfläche bereits anliegenden Außenschlauch extrudiert wird - der Außenschlauch in eine oder mehrere an die Muffenformfläche entgegen der Produktionsrichtung X anschließende Wellenformfläche extrudiert wird und dabei der auf die Innenseite des Außenschlauchs einwirkende Druck zumindest kurzzeitig erhöht wird. Hierbei kann vorzugsweise vorgesehen sein, dass diese Erhöhung des auf die Innenseite des Außenschlauchs einwirkenden Drucks auf einen Druck erfolgt, der über einem Druckwert PA1 liegt, der auf die Innenseite des Außenschlauchs als konstanter Druckwert oder als Druckmittelwert einwirkt während der Wellenausformung des Außenschlauchs, die der Muffenausformung des Außenschlauchs unmittelbar vorangeht. Um die Extrusion des Innenschlauchs an die bereits an der Muffenformfläche anliegende Ausformung des Außenschlauchs zeitlich abgestimmt vorzubereiten, kann vorgesehen sein, dass die in Schritt a3 vorgesehene Reduktion des auf die Innenseite des Außenschlauchs einwirkenden Drucks erfolgt, noch bevor der Innenschlauch in den an der Muffenformfläche bereits anliegenden Außenschlauchs extrudiert wird und aber während dem der Außenschlauch in eine oder mehrere an die Muffenformfläche entgegen der Produktionsrichtung X anschließende Wellenformfläche extrudiert wird.

Bei besonders bevorzugten Ausführungen kann für eine besonders sichere flächige Anlage des Innenschlauchs, ohne Lufteinschlüsse zwischen Innenschlauch und Außenschlauch zu erhalten, vorgesehen sein, dass während in Schritt a4 der Innenschlauch in den an der Muffenformfläche bereits anliegenden Außenschlauch extrudiert wird, der Außenschlauch in eine oder mehrere an die Muffenformfläche entgegen der Produktionsrichtung anschließende Wellenformflächen extrudiert wird, und zwar mit auf die Innenseite des Außenschlauchs einwirkenden Atmosphärendruck oder nahe Atmosphärendruck liegenden Überdruck, wobei die Anlage des Außenschlauchs an die Wellenformfläche unter Einwirkung von Vakuum erfolgt, das im Bereich der Wellenformfläche auf die Außenseite des Außenschlauchs einwirkt.

Bei besonders bevorzugten Ausführungen kann vorgesehen sein, dass über die gesamte Zeit der in Schritt a2 erfolgten Extrusion des Außenschlauchs in die Muffenformfläche der auf die Innenseite des Außenschlauchs einwirkende Druck pa über Atmosphärendruck gehalten wird.

Was die Ausformung des Innenschlauchs mit Anlage des Innenschlauchs an die bereits ausgeformte Muffe des Außenschlauchs betrifft, ist besonders vorteilhaft, wenn vorgesehen wird, dass über die gesamte Zeit der in Schritt b2 erfolgenden Extrusion des Innenschlauchs in den an der Muffenformfläche bereits anliegenden Außenschlauch der auf die Innenseite des Außenschlauchs einwirkende Druck
entweder auf Atmosphärendruck gehalten wird, oder auf einem geregelten Druck pa2 eingestellt wird, der über Atmosphärendruck liegt und aber zum Ende der Muffenausformung auf Atmosphärendruck reduziert wird.

Was die Steuerung des auf die Innenseite des Innenschlauchs einwirkenden Drucks bei der Muffenausformung des Innenschlauchs betrifft, kann bei bevorzugter Weiterbildung des Verfahrens vorgesehen sein, dass die in Schritt b1 vorgesehene Erhöhung des auf die Innenseite des Innenschlauchs einwirkenden Drucks auf einen Druck über Atmosphärendruck mit einem langsamen Druckanstieg erfolgt.

Für eine besonders zuverlässige Anlage des Innenschlauchs an den an der Muffenformfläche bereits anliegenden Außenschlauch kann vorgesehen sein, dass der auf die Innenseite des Innenschlauchs in Schritt b2 einwirkende Überatmosphärendruck zum Ende der Muffenausformung des Innenschlauchs nochmals deutlich erhöht wird.

Die vorrichtungsgemäße Lösung der vorliegenden Erfindung erfolgt jeweils mit dem Gegenstand der unabhängigen Vorrichtungsansprüche 19 und 20.

Bei diesem Gegenstand handelt es sich um eine Vorrichtung zur Herstellung eines endlosen doppelwandigen aus vorzugsweise thermoplastischem Kunststoff bestehenden Rohres mit Wellrohrabschnitten und Muffenrohrabschnitten zur Durchführung des vorgenannten Herstellungsverfahrens. Wesentlich ist, dass der axiale Abstand zwischen der ersten Düse und der zweiten Düse größer oder gleich ist als bzw. wie die axiale Längserstreckung des die Muffenformfläche aufweisenden Abschnitts des Formkanals. Bei dieser Vorrichtung ist es dann möglich, die Muffenausformung des Außenschlauchs und die Muffenausformung des Innenschlauchs in nacheinander folgenden separaten Schritten durchzuführen, d. h. über den Spritzkopf wird aus der Außenschlauchdüse der Außenschlauch in die Formflächen der Formbacken extrudiert und aus der in dem Spritzkopf vorderen Innenschlauchdüse wird der Innenschlauch in dem bereits an den Formflächen der Formbacken anliegenden Außenschlauch hineinextrudiert.

Was die Zuordnung des ersten Gaskanals und des zweiten Gaskanals auf die mit der Innenseite des Außenschlauchs zusammenwirkenden Stützluft bzw. die mit der Innenseite des Innenschlauchs zusammenwirkende Stützluft betrifft, ist vorrichtungsmäßig die Ausgestaltung v1 vorgesehen, nämlich dass die mit der Innenseite des Außenschlauchs zusammenwirkende Stützluft mit einem mit dem ersten Gaskanal verbundenen ersten Druckregler verbunden ist und die mit der Innenseite des Innenschlauchs zusammenwirkende Stützluft mit einem mit dem zweiten Gaskanal verbundenen zweiten Druckregler verbunden ist.

Was die Steuerungsvorrichtung betrifft, ist erfindungsgemäß die Ausgestaltung v2 vorgesehen, wonach der erste und der zweite Druckregler mit einer vorzugsweise elektronischen Steuerungsvorrichtung zur Steuerung der Druckregler verbunden sind, wobei die Steuerungsvorrichtung ein Steuerprogramm aufweist und die Steuerungsvorrichtung in Verbindung mit den Druckreglern derart ausgelegt ist, dass der Außenschlauch und der Innenschlauch gemäß dem Verfahren nach einem der Ansprüche 1 bis 18 beaufschlagbar ist.

Das Steuerprogramm stellt einen Teil der Steuerungseinrichtung dar, indem die Steuerungseinrichtung mit dem Steuerprogramm programmiert ist. Die Steuerungsvorrichtung mit dem Steuerprogramm ist derart ausgebildet, dass die Innenseite des Außenschlauchs mit einem gesteuerten und/oder geregelten Druck gemäß den Schritten a1, a2, a3 und a4 beaufschlagt wird und/oder beaufschlagbar ist und die Innenseite des Innenschlauchs mit einem gesteuerten und/oder geregelten Druck gemäß den Schritten b1, b2 und b3 beaufschlagt wird und/oder beaufschlagbar ist,
wobei die Schritte a1 bis a4 wie folgt definiert sind:
Schritt a1: kurz bevor oder zu Beginn der Extrusion des Außenschlauchs in die Muffenformfläche wird der auf die Innenseite des Außenschlauchs einwirkende Druck reduziert,
Schritt a2: während der Extrusion des Außenschlauchs in die Muffenformfläche wird der auf die Innenseite des Außenschlauchs einwirkende Druck derart variiert oder konstant gesteuert, dass er zumindest über den überwiegenden Teil der Zeitdauer der Extrusion des Außenschlauchs in die Muffenformfläche über Atmosphärendruck liegt,
Schritt a3: nachdem die Extrusion des Außenschlauchs in die Muffenformfläche beendet ist, und zwar bevor oder zu Beginn der Extrusion des Innenschlauchs in den an der Muffenformfläche bereits anliegenden Außenschlauch wird der auf die Innenseite des Außenschlauchs einwirkende Druck auf Atmosphärendruck oder auf einen Druck, der in einem Bereich geringfügig über Atmosphärendruck liegt, reduziert, und
Schritt a4: während der Extrusion des Innenschlauchs in den an der Muffenformfläche bereits anliegenden Außenschlauch wird der auf die Innenseite des Außenschlauchs einwirkende Druck zumindest über den überwiegenden Teil des Zeitraums der Extrusion des Innenschlauchs in den an der Muffenformfläche bereits anliegenden Außenschlauch auf Atmosphärendruck oder auf einen konstanten oder variablen Druck, der in einem Bereich geringfügig über Atmosphärendruck liegt, gehalten,
wobei die Schritte b1 bis b3 wie folgt definiert sind:
Schritt b1: kurz bevor oder zu Beginn der Extrusion des Innenschlauchs in den an der Muffenformfläche bereits anliegenden Außenschlauch wird der auf die Innenseite des Innenschlauchs einwirkende Druck erhöht auf einen Druck über Atmosphärendruck, und
Schritt b2: während der Extrusion des Innenschlauchs in den an der Muffenformfläche bereits anliegenden Außenschlauch wird der auf die Innenseite des Innenschlauchs einwirkende Druck auf Überatmosphärendruck gehalten, und
Schritt b3: nachdem die Extrusion des Innenschlauchs in den an der Muffenformfläche bereits anliegenden Außenschlauch beendet ist oder kurz davor, wird der auf die Innenseite des Innenschlauchs einwirkende Druck reduziert auf Atmosphärendruck oder einen Druck über Atmosphärendruck.

Was das Zusammenwirken der Druckregler mit den Ventilen für den Raum A und für den Raum B betrifft, kann vorzugsweise vorgesehen sein, dass mindestens einer der Druckregler, vorzugsweise der erste und der zweite Druckregler jeweils ein zugeordnetes elektronisch gesteuertes Druckreglerventil, vorzugsweise ein Proportionalventil aufweist, über das in dem zugeordneten Raum A bzw. B ein Druck über Atmosphärendruck oder ein Druck über Atmosphärendruck einschließlich Atmosphärendruck konstant und/oder variabel einstell- und/oder regelbar ist.

Für die Verbindung des Raums A bzw. des Raums B mit Atmosphäre, um Atmosphärendruck im Raum A bzw. B einzustellen, kann vorgesehen sein, dass der Druckregler ein Umschaltventil aufweist, das in geöffneter Stellung den dem Druckregler zugeordneten Raum A bzw. B mit Atmosphäre verbindet.

Hierbei kann im Sinne eines einfachen Aufbaus bei gleichzeitig zuverlässigem Funktionieren vorgesehen sein, dass das Umschaltventil und das elektronisch gesteuerte Druckregelventil, vorzugsweise als Proportionalventil ausgebildet mit dem zugeordneten Raum so verbunden ist, dass bei geöffnetem Umschaltventil in dem zugeordneten Raum Atmosphärendruck eingestellt wird unabhängig von der Stellung des elektronischen Druckregelventils.

Weitere Merkmale und Vorteile von möglichen Ausführungen werden anhand der Figuren, die ein bevorzugtes Ausführungsbeispiel zeigen, erörtert.

Die Erfindung wird nun für ein bevorzugtes Ausführungsbeispiel anhand von Figuren näher erläutert.

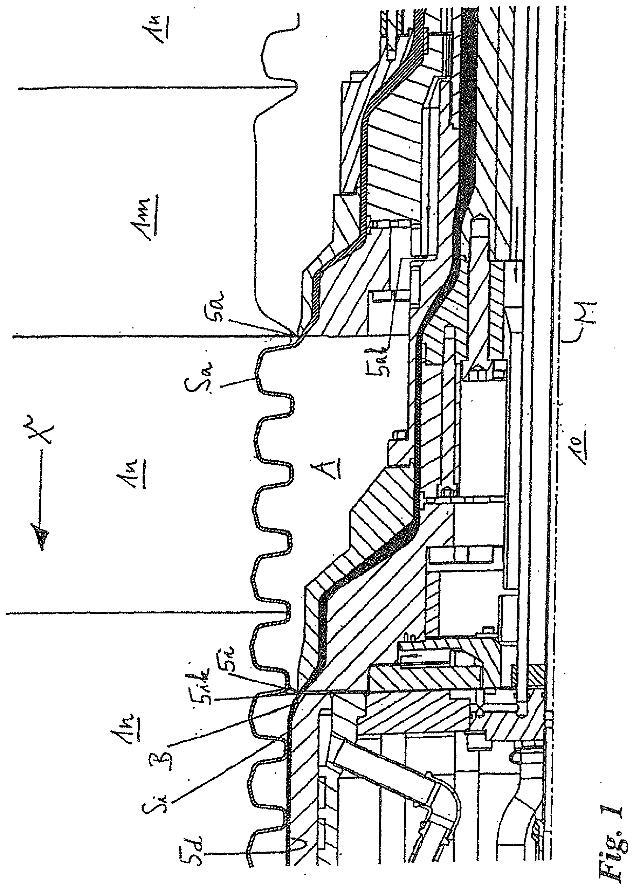

Dabei zeigen Fig. 1 bis Fig. 7 schematische Schnittdarstellungen eines Ausschnitts des Formkanals im Anfangsbereich der Formstrecke mit in den Formkanal hineinragender Düseneinrichtung, unterschiedliche nacheinander abfolgende Verfahrensstadien zeigend.

Der Korrugator in dem dargestellten Ausführungsbeispiel weist Formbacken 1n, 1m auf, die in einer linearen Formstrecke 10 paarweise hintereinander in Produktionsrichtung X fortschreitend geführt sind. Die Formbackenpaare umgeben mit ihrer nach innen gewandten Formfläche jeweils einen im wesentlichen zylindrischen Formhohlraum. Die in der Formstrecke 10 axial hintereinander geführten Formbackenpaare bilden einen aus den zylindrischen Formhohlräumen zusammengesetzten Formkanal, der sich entlang der in den Figuren eingezeichneten zentralen Mittelachse M erstreckt.

In den in den Figuren dargestellten Anfangsbereich des Formkanals 10 ragt eine Düseneinrichtung 5 eines nicht dargestellten Extruders. Die Düseneinrichtung 5 ist entlang der zentralen Mittelachse M ausgerichtet. Der Korrugator mit seinen Formbacken 1n, 1m und die Düseneinrichtung 5 sind jeweils symmetrisch zur zentralen Mittelachse M ausgebildet. In den Figuren ist lediglich die rechte Symmetrieseite dargestellt, d. h. lediglich die rechten Formbacken 1n, 1m und lediglich die rechte Seite der symmetrischen Düseneinrichtung. Die entsprechend ausgebildeten und angeordneten linken Formbacken 1n, 1m und die linke Seite der Düseneinrichtung 5 sind also in den Figuren nicht dargestellt.

Aus der Düseneinrichtung 5 treten zwei konzentrische thermoplastische Kunststoffschmelzeschläuche in den Formkanal ein. Bei den Kunststoffschmelzeschläuchen handelt es sich um einen Außenschlauch Sa und einen Innenschlauch Si. Diese Kunststoffschmelzeschläuche durchlaufen in der Formstrecke 10 den Formkanal in Produktionsrichtung X. Sie werden dabei an den Formflächen der Formbacken 1n, 1m geformt und gekühlt und verlassen den Formkanal als doppelwandiges Endloswellrohr mit Muffenabschnitten.

Die Formbacken 1n, 1m werden in dem Formkanal zur fortschreitenden Bewegung in Produktionsrichtung X über einen nicht dargestellten Antriebsmotor angetrieben. Der Antriebsmotor kann bodenseitig in dem Maschinentisch, auf dem die Formbacken 1n, 1m geführt sind, angeordnet sein und über ein Abtriebsritzel mit an den Formbacken bodenseitig ausgebildeten Zahnstangen kämmen. Die Formbacken 1n, 1m werden jeweils vom Ende der Formstrecke 10 zum Anfang der Formstrecke rückgeführt. Dies ist in den Figuren nicht dargestellt. Die Rückführung kann über eine motorisch angetriebene Greifereinrichtung, vorzugsweise eine Greifereinrichtung für die linken Formbacken und eine Greifereinrichtung für die rechten Formbacken erfolgen oder auch dadurch, dass die linken und die rechten Formbacken in umlaufenden Führungsbahnen, vorzugsweise über motorisch angetriebene Mitnehmer geführt werden.

Bei den in der Formstrecke 10 in den Figuren eingesetzten Formbacken ist zwischen Normalformbacken 1n und Muffenformbacken 1m zu unterscheiden. Die Normalformbacken 1n weisen gewellte Formfläche zur Ausformung der gewellten Rohrabschnitte auf. Die Muffenformbacken 1m weisen eine vorzugsweise glatte zylindrische oder leicht konische Muffenformfläche auf und dienen zur Ausformung der vorzugsweise glatt zylindrischen Muffenrohrabschnitte. Vorzugsweise werden jeweils mehrere Paare von Normalformbacken 1n und nur ein Paar oder wenige Paare von Muffenformbacken 1m in dem Formbackenkreislauf und damit in der Formstrecke 10 geführt. Bei sogenannten Shuttlekorrugatoren, wie zum Beispiel bekannt aus EP 0 270 694 B1, können die Muffenformbacken auch, falls gewünscht, jeweils nur temporär in den Kreislauf eingeschleust werden, d. h. nach ihrer Einschleusung wieder aus dem Kreislauf entfernt und in einer Parkstation auf dem Maschinentisch geparkt werden.

Die Düseneinrichtung 5 ist in dem dargestellten Fall so ausgebildet, dass die aus der Düseneinrichtung austretenden Kunststoffschmelzeschläuche, wie oben erwähnt, als zwei Kunststoffschmelzeschläuche ausgebildet sind, nämlich als ein Innenschlauch Si und ein Außenschlauch Sa. Die Düseneinrichtung 5 weist eine ringförmige Außenschlauchdüse 5a und eine Innenschlauchdüse 5i auf. An dem Austrittsende der Außenschlauchdüse 5a tritt der Außenschlauch Sa aus. An dem Austrittsende der Innenschlauchdüse 5i tritt der Innenschlauch Si aus. Das Austrittsende der Außenschlauchdüse 5a ist dem Austrittsende der Innenschlauchdüse 5i - in Produktionsrichtung X gesehen - vorgeschaltet. Somit kann man sagen, dass der Innenschlauch Si in den Außenschlauch Sa hineinextrudiert wird. An der Innenschlauchdüse 5i ist ein Kühldorn 5d - in Produktionsrichtung X gesehen - nachgeschaltet.

Der Außendüse 5a ist ein Luftkanal 5ak und der Innendüse 5i ein Luftkanal 5ik zugeordnet. Das Austrittsende des Luftkanals 5ak ist dem Austrittsende der Außenschlauchdüse 5a - in Produktionsrichtung X gesehen - nachgeschaltet. Über den Luftkanal 5ak wird Luft, sogenannte Außenluft, als Stützluft des Außenschlauches Sa in den Raum A, der zwischen der Innenwandung des Außenschlauchs Sa und der Außenwandung des Innenschlauchs Si ausgebildet ist, eingeblasen. Über den Luftkanal 5ik wird in entsprechender Weise Luft, sogenannte Innenluft, als Stützluft des Innenschlauches Si in den Raum B zwischen der Innenwandung des Innenschlauchs Si und der Außenwandung des Kühldorns 5d eingeblasen. Der Druck pa der Außenluft kann über einen mit dem Luftkanal 5ak verbundenen Druckregler, z. B. abhängig von den jeweiligen Positionen der eingesetzten Formbacken im Formkanal und/oder nach einem vorgegebenen Druckprofil geregelt werden. In entsprechender Weise kann der Druck pi der Innenluft über einen mit dem Luftkanal 5ik verbundenen Druckregler geregelt werden.

Wesentlich bei dem dargestellten Ausführungsbeispiel ist, dass der Abstand zwischen dem Austrittsende der Außenschlauchdüse 5a und dem Austrittsende der Innenschlauchdüse 5i größer ist als die axiale Erstreckung L der Muffenformfläche.
In dem dargestellten Fall in den Figuren ist der Düsenabstand ca. 1,4 mal so groß wie die axiale Erstreckung L der Muffenformfläche.

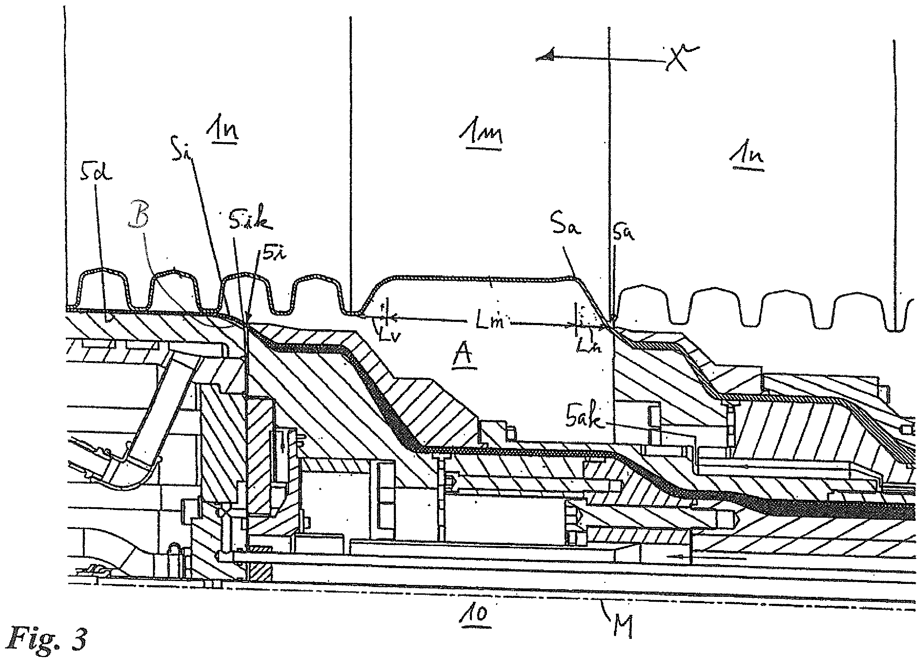

Bei dem dargestellten Ausführungsbeispiel wird die Muffenformfläche jeweils durch nur ein Muffenformbackenpaar gebildet. Die Formfläche des Muffenformbackens 1m weist jeweils eine glatte zylindrische oder leicht konische Formfläche mit der axialen Länge Lm auf, in Produktionsrichtung X gesehen, vor und nach dieser Muffenfläche jeweils anschließend einen Übergangsbereich mit der axialen Länge Lv und Ln vorhanden. Der Übergangsbereich weist einen im wesentlichen geradlinigen Anstieg auf in einer vorderen Flanke am vorderen Ende der Muffenformfläche und einen im wesentlichen geradlinigen Abfall in einer hinteren Flanke am hinteren Ende der Muffenformfläche. Zwischen der vorderen Flanke und der zylindrischen oder konischen Formfläche ist ein abgerundeter Radiusbereich. Entsprechendes gilt für den Übergangsbereich des hinteren Endes, wobei allerdings der Radiusbereich eine Rundung mit kleinerem Krümmungsradius aufweist und in Art eines Übergangshöckers ausgebildet sein kann. Die gesamte axiale Länge L der Muffenformfläche ergibt sich aus der Summe aus Lv, Lh, Lm (sh. Fig. 3).

Die Formfläche der Normalformbacken 1n weist jeweils eine gewellte Formfläche auf, mit axial hintereinander angeordneten parallelen Wellen mit periodisch wiederkehrenden Wellenbergen und Wellentälern, jeweils koaxial um die zentrale Mittelachse M des Formkanals angeordnet.

Die Formbacken 1n, 1m weisen, wie an sich bekannt, in den Formflächen Vakuumöffnungen auf, die mit Vakuumkanälen in den Formbacken über eine nicht dargestellte Vakuumeinrichtung dargestellt sind, um die Anlage des Außenschlauchs an den Formflächen zu unterstützen.

Das in dem dargestellten Fall in der Formstrecke 10 ausgeformte Endlosrohr erhält in den Abschnitten, in denen die Normalformbacken 1n einwirken, die Ausformung eines doppelwandigen Wellrohrs mit gewelltem Außenrohr und einem glatten zylindrischen Innenrohr, das mit dem Außenrohr jeweils in dem Bereich der Wellentäler verschweißt ist. In den Abschnitten, in denen die Muffenformbacken 1m einwirken, erhält das Endlosrohr Muffenabschnitte, d. h. eine Muffenausformung mit der axialen Länge L = Lm + Lv + Lh. In dem gesamten Bereich der Länge L der Muffenausformung sind im optimalen Fall der Außenschlauch und der Innenschlauch vollflächig miteinander verschweißt.

Bei bevorzugten Ausführungen kann der auf die Innenseite des Außenschlauchs in Raum A einwirkende Druck pa hinsichtlich seiner Höhe auf Drücke in folgenden Druckwertebereichen geregelt und/oder gesteuert werden:
- pa1 im Bereich von 0,01 bar über Atmosphärendruck bis 0,3 bar über Atmosphärendruck
- pa2 im Bereich von Atmosphärendruck bis 3facher Wert von pa1

In bevorzugten Ausführungen kann der auf die Innenseite des Innenschlauchs im Raum B einwirkende Druck pi hinsichtlich seiner Höhe auf Drücke in folgenden Druckwertebereichen geregelt und/oder gesteuert werden:
- pi1 im Bereich von Atmosphärendruck bis 0,1 bar über Atmosphärendruck
- pi2 im Bereich von Atmosphärendruck bis 3facher Wert von pi1

Die genannten Druckbereiche gelten für Nennweiten 100 bis 1000. Die Druckwerte sind von der Wanddicke der herzustellenden Rohre und von dem einzusetzenden Material abhängig.

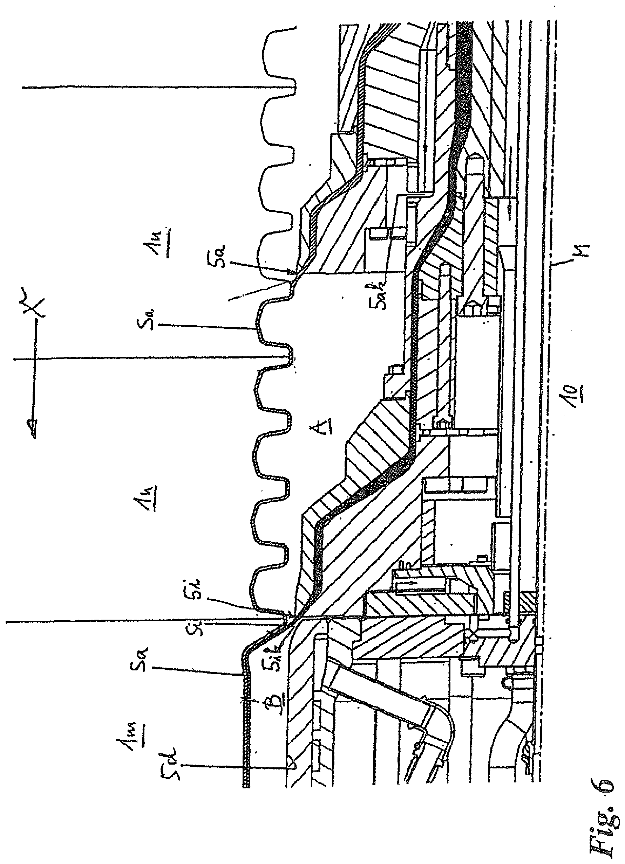

Die Arbeitsweise wird nun anhand der Figuren 1 bis 7 beschrieben. Die Figuren 1 bis 7 zeigen unterschiedliche Verfahrensstadien im Formkanal 10 im Bereich der Düseneinrichtung 5. Die Figuren 1 bis 7 zeigen die Verfahrensstadien in der Reihenfolge, wie sie bei dem Herstellungsverfahren nacheinander ablaufen. Die unterschiedlichen Verfahrensstadien werden dadurch bestimmt, welches Formbackenpaar, d. h. welche Formfläche, ob eine gewellte Formfläche oder eine Muffenformfläche gerade im Anfangsbereich der Formstrecke 10 den Bereich der Düseneinrichtung 5 passiert.
Figur 1:
   Was die Position der Formfläche betrifft, zeigt Figur 1 das Stadium kurz bevor die Vorderkante der Muffenformfläche über die Außendüse 5a läuft, d.h. kurz vor Beginn der Muffenausformung des Außenschlauchs Sa. In dem in Figur 1 gezeigten Stadium befindet sich die gesamte axiale Länge der Muffenformfläche noch vor der Außendüse 5a. Der Muffenformfläche sind in Produktionsrichtung X gesehen jeweils gewellte Formflächen vor- und nachgeschaltet, sodass also in dem Stadium in Figur 1 im Bereich zwischen der Außenschlauchdüse 5a und der Innenschlauchdüse 5i und im Bereich vor der Innenschlauchdüse 5i jeweils gewellte Formflächen angeordnet sind.
   Was die Druckverhältnisse in dem Stadium in Figur 1 betrifft: Der durch die sog. Außenluft in dem Raum A eingestellte Druck pa wird in Figur 1 gerade von pa1 auf pa2 geregelt. Das heißt, der Druck pa im Raum A wird beginnend mit dem in Figur 1 gezeigten Stadium variabel als Druck pa2 geregelt. Unter dem Begriff "Außenluft" wird die durch den Luftkanal 5ak eintretende Stützluft verstanden, die auf die Innenseite des Außenschlauchs Sa einwirkt. Mit dem Passieren der Vorderkante der Flanke der Muffenformfläche beginnt die Muffenausformung des Außenschlauchs. Der aus der Außenschlauchdüse 5a austretende Außenschlauch Sa wird durch die Drucksteuerung des Drucks pa2 aufgeweitet, sodass sich der aus der Außendüse 5a austretende Außenschlauch Sa an die vordere Flanke des Übergangsbereichs über dessen Länge Lv flächig anlegt. Hierfür wird im Raum A der Druck pa2 gegenüber dem vor dem in Fig. 1 dargestellten Stadium konstant eingestellten Drucks pa1 kurzzeitig reduziert. Durch diese Druckreduktion wird eine sichere Anlage des Außenschlauchs Sa an die Flanke unter Vermeidung eines Überblasens erreicht. Unter dem Begriff "Überblasen" wird ein Ausblähen des Außenschlauchs in Richtung entgegen der Produktionsrichtung verstanden. Bis unmittelbar vor dem Stadium in Figur 1 ist der Druck pa1 in dem konkreten Fall konstant eingestellt. Die in dem Stadium in Figur 1 erfolgende Reduktion des Drucks erfolgt auf einem noch über Atmosphärendruck liegenden Druck pa2.
   Bis zu dem in Figur 1 gezeigten Stadium war der durch die Außenluft in Raum A als konstanter Druck pa1 eingestellt, und zwar zur Wellenausformung des Außenschlauchs Sa. Unter Einwirkung dieses konstanten Drucks pa1 legte sich der aus der Außenschlauchdüse 5a austretende Außenschlauch Sa an die die Außendüse 5a jeweils gerade passierende gewellte Formfläche an. Wie in Figur 1 zu erkennen, liegt in dem dargestellten Stadium der in Produktionsrichtung X an die Außendüse anschließende Außenschlauch Sa an der gewellten Formfläche an. Diese Anlage des Außenschlauchs erfolgte also durch die vorangehende Verfahrensabfolge vor dem Stadium in Figur 1 unter Einwirken des konstanten Drucks pa1 und zusätzlich unter Einwirkung des an der Wellenformfläche anliegenden Vakuums.
   Was den Innenschlauch Si betrifft, zeigt Figur 1 folgende Situation: Der aus der Innendüse 5i austretende Innenschlauch Si wird unter Einwirkung des im Raum B eingestellten Drucks pi1 und/oder durch den Kühldorn 5d zum Wellental des an der gewellten Formfläche anliegenden Außenschlauchs hin beaufschlagt und damit hingedrückt, um dort zu verschweißen. Der durch die sog. Innenluft in dem Raum B eingestellte Druck pi liegt vorzugsweise konstant, und zwar vorzugsweise bei Atmosphärendruck oder geringfügig über Atmosphärendruck Unter dem Begriff "Innenluft" wird die durch den Luftkanal 5ik eintretende Stützluft, die auf die Innenseite des Innenschlauchs Si einwirkt. Wie in Figur 1 zu erkennen ist, liegt in dem dargestellten Stadium der in Produktionsrichtung X an die Innenschlauchdüse 5i anschließende Innenschlauch Si bereits als glatter zylindrischer Innenschlauch an den Wellentälern des Außenschlauchs Sa an und ist dort mit den Wellentälern des Außenschlauchs Sa jeweils verschweißt. Diese Ausgestaltung ist also durch die vorangehende Verfahrensabfolge vor dem Stadium in Figur 1 unter Einwirkung des Drucks pi im Raum B unter Mitwirkung des Kühldorns erfolgt.
Figur 2:

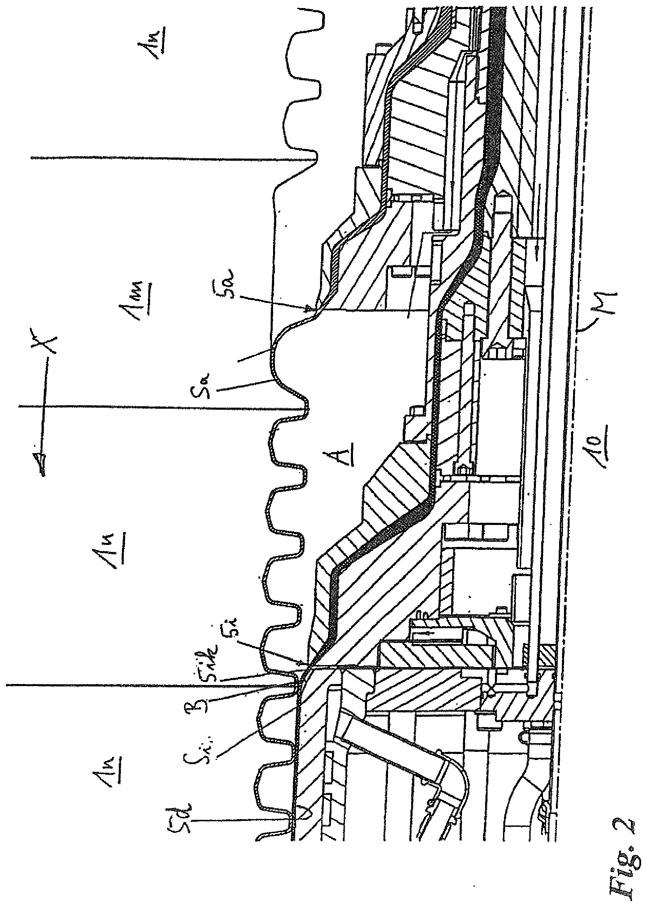

   Figur 2 zeigt das Stadium, in dem nach der geradlinig ansteigenden vorderen Flanke der sog. Radiusbereich der Außenschlauchmuffe gerade ausgebildet worden ist. Unter dem Begriff "Radiusbereich" wird der gesamte Abschnitt der Außenschlauchmuffe zwischen der vorderen Flanke und dem zylindrischen Mittelabschnitt der Muffe verstanden. Zur Ausformung des Radiusbereichs ist unmittelbar vor dem in Figur 2 dargestellten Stadium der Druck pa2 kurzzeitig gegenüber dem Druck pa1 des Stadiums in Figur 1 erhöht worden. Vorzugsweise ist der Druck pa2 auf einen Druck erhöht worden, der höher ist als der vor dem Beginn der Muffenausformung für die Wellenausformung des Außenschlauchs Sa eingestellte konstante Druck pa1. Diese unmittelbar vor dem Stadium in Figur 2 erfolgende Druckerhöhung von pa2 ist jedoch sehr kurzzeitig. In dem in Figur 2 gezeigten Stadium wird der Druck pa2 gerade wieder reduziert auf einen Druck, der kleiner ist als der vor der Muffenausformung für die Wellenausformung des Außenschlauchs Sa konstant eingestellte Druck pa1.
   Was den Innenschlauch Si betrifft, zeigt Figur 2 eine gleiche Situation wie Figur 1: Der Druck im Raum B liegt weiterhin konstant bei pi1.
Figur 3:
   Figur 3 zeigt das Stadium, wenn die Muffenformfläche die Außenschlauchdüse 5a vollständig passiert hat. Der Außenschlauch Sa liegt in Figur 3 an dem zylindrischen Mittelabschnitt der Muffenformfläche über dessen gesamte Länge Lm bereits flächig an und er liegt ebenfalls flächig an der hinteren Flanke der Muffe über deren gesamte Länge Lh an. Diese vollständige Anlage mit Ausformung der Flanke ohne Lufteinschlüsse wurde erreicht, indem kurz vor dem Stadium Figur 3, d. h. unmittelbar vor der Ausformung der Flanke der Druck pa2 erhöht worden ist auf einen Druck pa2, der größer ist als der konstante Druck pa1 der Wellenbildung vor der Muffenausformung.
   Es sei noch darauf hingewiesen, dass vor dieser im Stadium in Figur 3 erfolgenden Druckerhöhung, die zur Ausformung des Muffenendes mit Endflanke dient, der Druck pa2 zur Ausformung des zylindrischen Muffenhauptabschnitts, also der Verfahrensablauf der zwischen dem Stadium in Figur 2 und dem Stadium in Figur 3 liegt, mit einer Druckregelung des Drucks pa2 erfolgt, die drei Alternativen vorsieht:
   Alternative 1 sieht vor, dass der Druck pa2 konstant gehalten wird, und zwar kleiner als der vor der Muffenausformung für die Wellenbildung konstant eingestellte Druck pa1. Dieser bei Alternative 1 also konstante Druck pa2 wird vorzugsweise über den gesamten zylindrischen Muffenabschnitt Lm konstant gehalten.
   Alternative 2 sieht im Unterschied zur Alternative 1 vor, dass der Druck pa2 variiert wird, und zwar mit jeweils kurzzeitiger Erhöhung des Drucks pa2, um eine vollständige Aufweitung des Außenschlauchs zu erhalten und mit jeweils kurzzeitiger Reduktion des Drucks pa2, um ein Überblasen zu verhindern. Der Druck pa2 wird hierfür also alternierend eingestellt werden, vorzugsweise um einen mittleren Druck pa2, der kleiner ist als der vor der Muffenausformung für die Wellenbildung konstant eingestellte Druck pa1. Die oberen Werte des alternierenden Drucks pa2 liegen vorzugsweise hier größer als der konstante Druck pa2 der Wellenbildung pa1. Die unteren Werte des Drucks pa2 liegen noch im Überatmosphärendruckbereich, aber nur geringfügig über Atmosphärendruck. Alternierend heißt, dass mindestens eine Druckvariation mit Druckerhöhung und Druckreduktion stattfindet.
   Alternative 3 ist gegenüber der Alternative 2 dahingehend modifiziert, dass der untere Druckwert des alternierenden Drucks bei Atmosphärendruck liegt.
   Was den Innenschlauch in dem in Figur 3 gezeigten Stadium betrifft: Der Innenschlauch Si wird gerade, gleich wie in den Figuren 1 und 2, unter Einwirkung des Raum B eingestellten Drucks pi1 zum Wellental des an der gewellten Formfläche anliegenden Außenschlauchs Sa hingedrückt und dort verschweißt. Der in Produktionsrichtung X sich fortsetzende Innenschlauch Si liegt, gleich wie in Figur 1 und Figur 2, bereits als glatter zylindrischer Innenschlauch an den Wellentälern des Außenschlauchs an.
Figur 4:

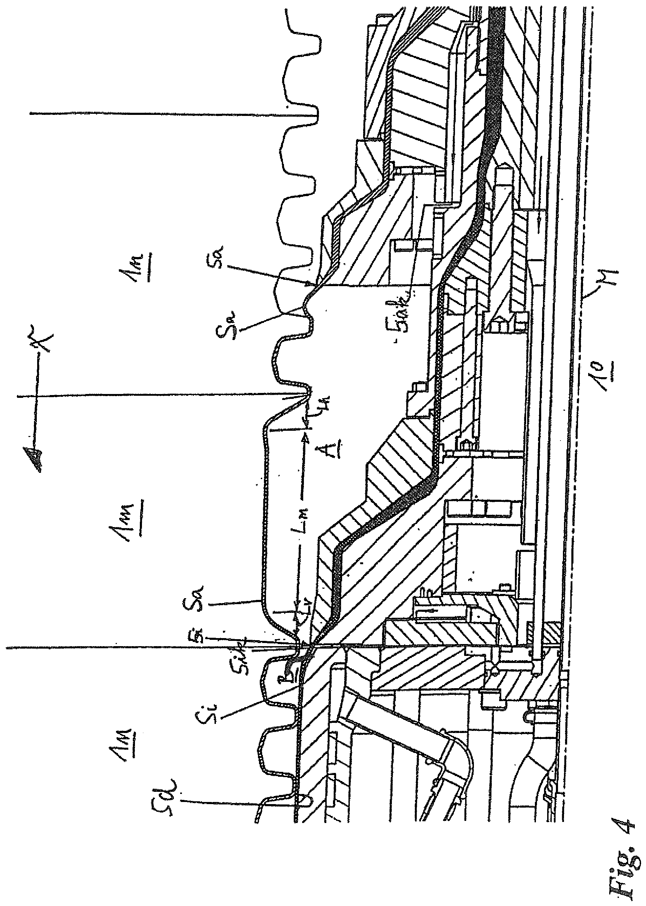

   Figur 4 zeigt das Stadium, wenn die Muffenformfläche gerade die Position der Innendüse 5i erreicht. Dies ist das Stadium, kurz bevor die Muffenausformung des Innenschlauchs beginnt, die dadurch erfolgt, dass der Innenschlauch Si in die bereits an der Muffenformfläche über die gesamte Länge flächig anliegend ausgeformte Außenschlauchmuffe hineinextrudiert wird und der Innenschlauch so aufgeweitet wird, dass er sich an den ausgeformten Außenschlauch anlegt. In dem Stadium in Figur 4 ist aufgrund der kürzeren Länge der Längserstreckung der Muffe relativ zu dem Abstand der Außenschlauchdüse 5a und der Innenschlauchdüse 5i in dem Bereich des ausgeformten Außenschlauchs zwischen dem Muffenende und der Außenschlauchdüse 5a eine Außenschlauchwelle ausgeformt. Eine weitere Außenschlauchwelle ist in Figur 4 gerade beginnend in der Ausformphase im Bereich unmittelbar nach dem Austritt das Außenschlauchs aus der Düse 5a.
   Was die Drucksituation in Figur 4 betrifft: Der Druck pa2 bis hin zu dem Stadium in Figur 4 ist gegenüber dem Druck pa2 des Stadiums in Figur 3 deutlich erhöht, um ein möglichst glattes zylindrisches Innenschlauchrohr zu erhalten. Der erhöhte Druck pa2 wird vorzugsweise während der gesamten Ausformung zwischen dem Stadium in Figur 3 bis zum Stadium in Figur 4 konstant eingestellt. In dem Stadium in Figur 4 wird der Raum A jedoch gerade entlüftet, indem z. B. ein Umschaltventil auf Atmosphärendruck geschaltet wird. Dadurch wird der im Raum A vorliegende Druck pa2 auf Atmosphärendruck reduziert. Die Zeitspanne, bis Atmosphärendruck erreicht ist, ist von dem Leitungswiderstand des Systems abhängig. Es ist angestrebt, dass die Reduktion auf Atmosphärendruck möglichst schlagartig erfolgt, was durch entsprechend kleineren Leitungswiderstand realisierbar ist.
   Was den Druck pi im Raum B betrifft: In dem Stadium in Figur 4 wird der Druck pi von pi1 auf pi2 zur Muffenausformung des Innenschlauchs angehoben. Diese Druckerhöhung erfolgt, während die Eingangsflanke der Muffe die Innendüse 5i passiert.
Figur 5:

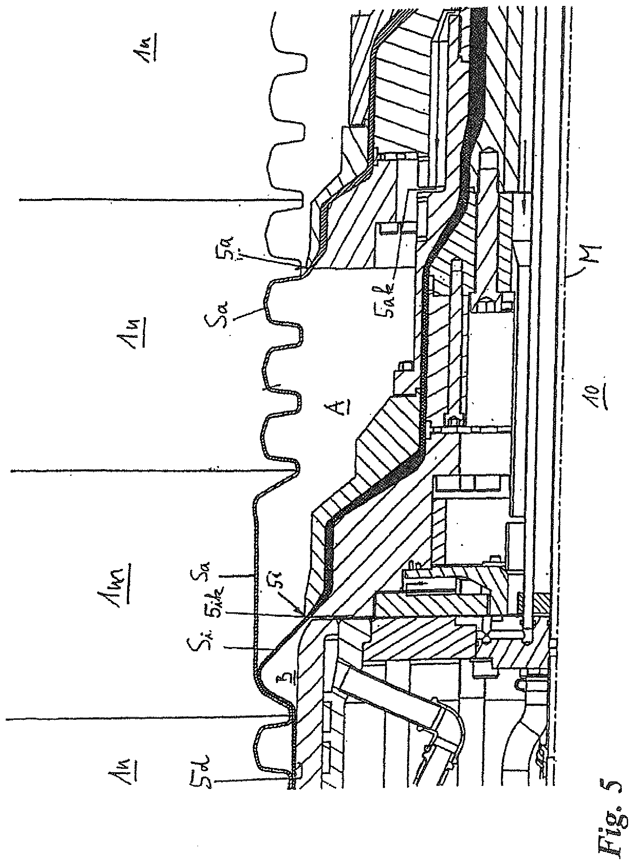

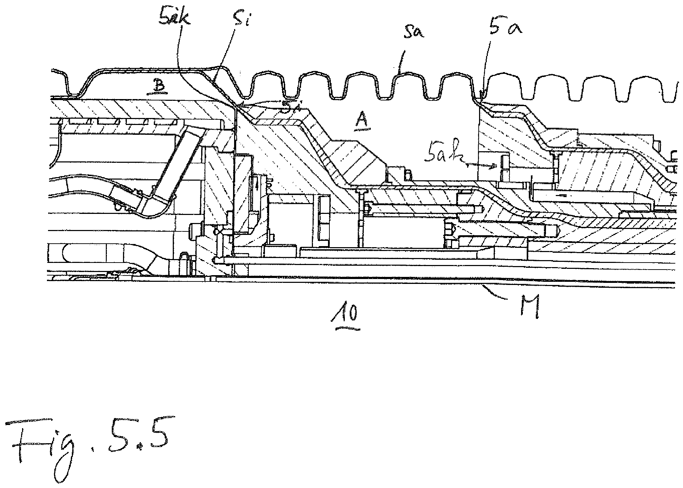

   Figur 5 zeigt das Stadium kurz nach dem Passieren der vorderen Muffenflanke über der Innendüse 5i. In dem Stadium Figur 5 wird der Druck im Raum B, der durch die Innenluft pi2 gebildet wird, langsam ansteigend erhöht, um eine möglichst gleichförmige Wanddicke der durch den Innenschlauch gebildeten Innenschicht der Muffe zu erhalten. Dieser langsame Druckanstieg im Raum B erfolgt, bis der Innenschlauch Si bis etwa über die halbe Muffenlänge als Innenschicht anliegt.
   Was die Wellenbildung des Außenschlauchs Sa in dem Abschnitt des Außenschlauchs zwischen dem hinteren Muffenende und der Außenschlauchdüse 5a betrifft: Der Druck pa2 im Raum A ist weiterhin auf Atmosphärendruck. Das heißt, die in Figur 5 zweite, dritte bis zur siebten Welle nach der Muffe wird in diesem Zeitabschnitt nur durch das am Außenschlauch außen anliegende Vakuum oder Teilvakuum ausgeformt. Diese Wellenausformung unter dem außen anliegenden Vakuum oder Teilvakuum funktioniert, sobald der Außenschlauch im Bereich benachbarter Wellentäler an der Wellenformfläche zur Anlage kommt.
Figur 5.5:
   Figur 5.5 zeigt das Stadium kurz vor dem Ende der Ausformung der Innenschicht. In diesem Stadium wird der im Raum B auf die Innenseite des Innenschlauchs einwirkende Druck pi2 nochmal deutlich erhöht, um eine möglichst blasenfreie Ausformung im hinteren Muffenbereich zu erreichen.
   Was die Wellenbildung des Außenschlauchs im Bereich zwischen dem Muffenende und der Außenschlauchdüse 5a in Figur 5.5 betrifft, gilt gleiches wie in Figur 5: Der Druck pa2 liegt weiterhin auf Atmosphärendruck.
Figur 6:
   In dem Stadium in Figur 6 ist der Innenschlauch vollständig zur Anlage an die Außenschlauchmuffe gebracht, d. h. Figur 6 zeigt den Zeitpunkt, in welchem gerade die Anlage des Innenschlauchs an die hintere Flanke der Außenschlauchmuffe erfolgt ist. In diesem Zeitpunkt wird der Druck pi2 im Raum B nun wieder reduziert auf pi1. Sobald der Innenschlauch den ersten Profilzahn nach der Muffe erreicht hat, d. h. sobald der Innenschlauch mit der ersten Welle nach der Muffe verbunden ist, ist die Innenluftzufuhr auf 0 geschaltet, d. h. es erfolgt keine Innenluftzufuhr mehr. Im Raum B stellt sich Atmosphärendruck ein.
   Was den Druck im Raum A betrifft: In dem Stadium in Figur 6 wird nun die Außenluft wieder auf pa1 geschaltet, d. h. in dem Raum A wird wieder der konstante Überdruck pa1 eingestellt. Bei dieser Druckerhöhung wird zunächst ein noch höherer Druck pa1 eingestellt, um den Druckaufbau im Raum A zu beschleunigen. Kurz danach wird auf konstanten Überdruck pa1 reduziert, um im Weiteren das Wellrohr mit Druck pa1 und ausgeschalteter Innenluft zu produzieren.
   Alternative zum Druckverlauf der Ausformung des Innenschlauchs:
   Nachdem in dem Stadium in Figur 5 der Innenschlauch an der vorderen Flanke und dem Radiusbereich des ausgeformten Außenschlauchs angelegt ist, sieht diese Alternative vor, dass der Druck pa2 nicht auf Atmosphärendruck gehalten wird, sondern ein geregelter Druck pa2 eingestellt wird, der zwar wesentlich geringer als der bei der Wellenbildung des Außenschlauchs ausgebildete konstante Druck pa1 ist, jedoch noch ein Überatmosphärendruck ist. Die Innenluft Pi müsste bei dieser alternativen Steuerung um die gleiche Druckdifferenz wie der gegenüber Atmosphärendruck erhöhte Druck pa2 erhöht eingestellt werden. Vor der Ausformung der hinteren Flanke muss jedoch für eine vollständige Muffenausformung der Druck pa2 wieder gegen Atmosphäre entlüftet werden, d.h. der Druck pa2 wird auch bei dieser Alternative in diesem Bereich auf Atmosphärendruck gebracht.
Figur 7:

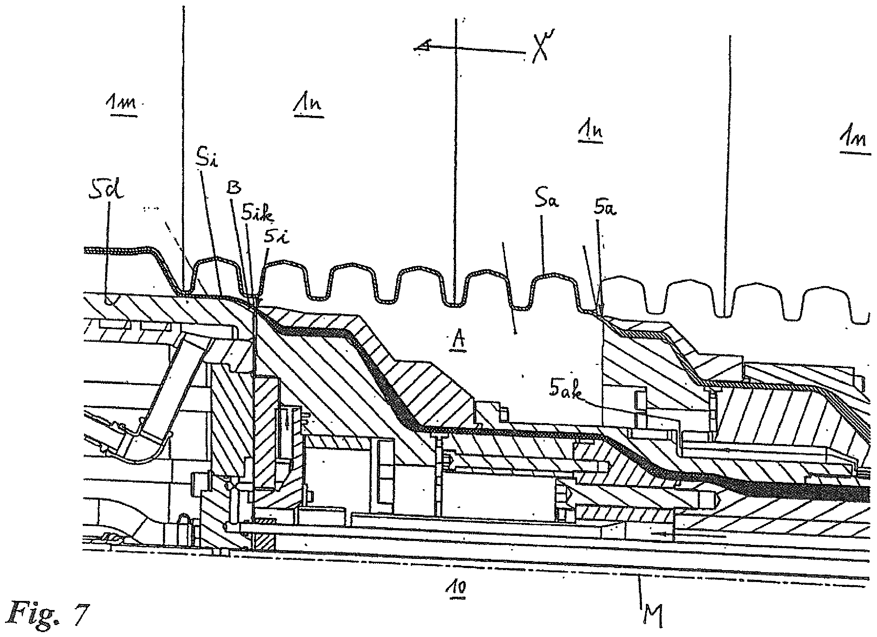

   Figur 7 zeigt das Stadium, das nach Figur 6 zur Ausformung der Wellen eingestellt wird und mit konstanten Bedingungen mit konstantem Druck pa1 = PA1 im Raum A und Atmosphärendruck pi im Raum B läuft, bis das Stadium in Figur 1 zur erneuten Ausbildung einer Muffe erreicht ist.

Bei dem in Verbindung mit den Figuren vorangehend auch vorrichtungsmäßig beschriebenen Ausführungsbeispiel wird die beschriebene Druckregelung und Druckführung also vorrichtungsmäßig wie folgt umgesetzt: Der Druck pa im Raum A wirkt auf die Innenseite des Außenschlauchs Sa. Der Raum A ist begrenzt durch die Innenseite des aus der Außenschlauchdüse 5a austretenden Außenschlauchs Sa und zur Produktionsrichtung hin durch die Außenseite des aus der Innenschlauchdüse 5i austretenden Innenschlauchs Si. Zur Achse des Formkanals hin bildet der Spritzkopf die Begrenzung, und zwar der Spritzkopfabschnitt im Bereich zwischen der Außenschlauchdüse 5a und der Innenschlauchdüse 5i. Die Regelung des Drucks pa erfolgt, soweit es sich um Überatmosphärendruck handelt, durch Einstellung eines Proportionalventils. Dieses Proportionalventil steuert die sogenannte Außenluft. Unter dem Begriff "Außenluft" wird die Stützluft verstanden, die im Raum A eingeleitet wird und dort auf die Innenseite des Außenschlauchs einwirkt. Die Einleitung dieser Stützluft erfolgt über den Luftkanal La, der zwischen der Außenschlauchdüse 5a und der Innenschlauchdüse 5i aus dem Spritzkopf in den Raum A einmündet. Die Position dieser Einmündung liegt zwischen der Außenschlauchdüse 5a und der Innenschlauchdüse 5i. Die Steuerung dieses Proportionalventils erfolgt, indem das Proportionalventil mit einer Druckmesseinrichtung verbunden ist, die den Ist-Wert des ausgangsseitigen Drucks des Proportionalventils misst und ein Messwertsignal an eine elektronische Steuerungseinrichtung abgibt. In der elektronischen Steuerungseinrichtung wird der Ist-Druckwert mit dem Sollwert des Steuerungsprogramms verglichen und bei entsprechender Abweichung das Proportionalventil zum Ausgleich des Ist-Druckwerts im Raum A angesteuert.

Für eine Entlüftung des Raums A ist ein Umschaltventil vorgesehen. Durch Öffnen des Umschaltventils wird der Raum A entlüftet durch Verbindung mit Atmosphärendruck. Der Druck pa im Raum A fällt in einem solchen Falle auf Atmosphärendruck ab. Die Geschwindigkeit dieses Druckabfalls hängt von dem Leitungswiderstand des Systems ab. Der Leitungswiderstand in dem System kann durch entsprechende Leitungsquerschnitte so ausgebildet sein, dass im Falle des Umschaltens des Umschaltventils auf Offenstellung der Druckabfall auf Atmosphärendruck sehr schnell erfolgt. Die Ansteuerung des Umschaltventils erfolgt abhängig vom Steuerungsprogramm über die elektrische Steuerungsvorrichtung. Solange das Umschaltventil geöffnet ist, bleibt der Atmosphärendruck im Raum A unverändert, unabhängig von der Einstellung des Proportionalventils. Auf die Außenseite des Außenschlauchs Sa wirkt bei dem dargestellten Ausführungsbeispiel ein Unterdruck ein. Die Unterdruckbeaufschlagung wird dadurch erzeugt, dass in der Formfläche Schlitze ausgebildet sind, die über Saugkanäle im Formbacken verbunden sind. Die Saugkanäle stehen mit einer Vakuumpumpeinrichtung in Verbindung. Es sei darauf hingewiesen, dass bei dem dargestellten Ausführungsbeispiel die genannte Formfläche der Normalformbacken 5n und der Muffenformbacken 5m mit solchen mit Saugkanälen verbundenen Schlitzen versehen ist, sodass über die genannte Formfläche eine Beaufschlagung mit Vakuum oder Teilvakuum erfolgen kann. Bei dem beschriebenen Verfahren ist eine solche kontinuierliche Vakuumbeaufschlagung zwischen der Formfläche und der Außenseite des Außenschlauchs auch konkret vorgesehen.

Der Druck im Raum B wird vorliegend mit pi bezeichnet. Der Raum B ist begrenzt durch den aus der Innenschlauchdüse 5i austretenden Innenschlauch Si und zur Achse des Formkanals hin durch einen Kühldorn, der an den Spritzkopf in Produktionsrichtung hin anschließt. Die Regelung des Drucks im Raum B kann durch eine entsprechende apparative Einrichtung erfolgen, wie die Regelung des Drucks pa. Die Regelung des Drucks pi erfolgt bei dem dargestellten Ausführungsbeispiel ebenfalls durch ein Proportionalventil, soweit es sich um Überatmosphärendruck handelt. Das Proportionalventil ist über eine Druckmesseinrichtung, die den Ist-Wert des ausgangsseitigen Druckes des Proportionalventils misst, verbunden, die ein entsprechendes Messsignal an eine elektronische Steuerungseinrichtung abgibt. In der elektronischen Steuerungseinrichtung wird dieser gemessene Ist-Wert des Drucks pi mit dem Soll-Druckwert des Steuerungsprogramms verglichen und im Falle einer Abweichung das Proportionalventil zum entsprechenden Druckausgleich angesteuert.

Zur Entlüftung des Raums B kann ebenfalls ein Umschaltventil vorgesehen sein, das bei geöffneter Stellung den Raum B mit Atmosphärendruck verbindet.

Die elektronische Steuerung des Drucks pa und die elektronische Steuerung des Drucks pi können in einer gemeinsamen elektronischen Steuerungseinrichtung erfolgen. In der gemeinsamen Steuerungseinrichtung erfolgt auch die Steuerung der Umschaltventile über das Steuerungsprogramm.

Für die Steuerung des Druckverlaufs sowohl im Raum A als auch im Raum B ist eine Sensoreinrichtung im Formkanal vorgesehen, die den Beginn der jeweiligen Muffe am Beginn des Formkanals erkennt und erfasst. Die IstStellung der Formbacken wird auf diese Weise erfasst, vorzugsweise handelt es sich bei der Sensoreinrichtung um eine magnetische oder optische Sensoreinrichtung. Die Sensoreinrichtung ist, wie vorangehend beschrieben, also so positioniert, dass sie den Einlauf der Formbacken in den Formtunnel erfasst. Das entsprechende Signal der Sensoreinrichtung wird an die elektronische Steuerungseinrichtung der Drucksteuerung geleitet, die vorzugsweise durch entsprechende Programmierung ein elektronisches Steuerprogramm aufweist, in welchem die Soll-Werte der Drücke des programmierten Druckverlaufs abhängig von der Position der Formbacken enthalten sind.

### Bezugszeichenliste

- 1n: Normalformbacken
- 1m: Muffenformbacken
- 5: Düseneinrichtung
- 5a: Außenschlauchdüse
- 5ak: Luftkanal Außenluft
- 5i: Innenschlauchdüse
- 5ik: Luftkanal Innenluft
- 5d: Kühldorn
- 10: Formstrecke
- Sa: Außenschlauch
- Si: Innenschlauch
- X: Produktionsrichtung
- M: zentrale Mittelachse
- pa1: Druck der Außenluft im Raum A auf die Innenseite des Außenschlauchs bei Ausformung der Wellen
- pa2: Druck der Außenluft im Raum A auf die Innenseite des Außenschlauchs bei Ausformung der Muffe
- pi1: Druck der Innenluft im Raum B auf die Innenseite des Innenschlauchs bei Ausformung des glatten Innenschlauchrohrs
- pi2: Druck der Innenluft im Raum B auf die Innenseite des Innenschlauchs bei Ausformung der Innenschlauchmuffe
- L: axiale Länge der Muffe
- Lm: axiale Länge der glatten zylindrischen Muffenformfläche
- Lv: axiale Länge des vorderen Übergangsbereichs der Muffenformfläche
- Lh: axiale Länge des hinteren Übergangsbereichs der Muffenformfläche

## Patentansprüche

1. Verfahren zur Herstellung eines endlosen doppelwandigen aus vorzugsweise thermoplastischem Kunststoffmaterial bestehenden Rohres mit Wellrohrabschnitten und Muffenrohrabschnitten,
durch Extrusion eines das Außenrohr des doppelwandigen Rohres bildenden Außenschlauchs (Sa) und eines das Innenrohr des doppelwandigen Rohres bildenden Innenschlauchs (Si) in einem Formkanal (10) mit mindestens einem Abschnitt mit gewellter Formfläche und mindestens einem Abschnitt mit vorzugsweise glatter, zylindrischer oder leicht konischer Muffenformfläche;
wobei vorgesehen ist,
- dass zur Ausformung eines Wellrohrabschnitts der Außenschlauch (Sa) in die gewellte Formfläche extrudiert wird und an der gewellten Formfläche zur Anlage gebracht wird, und der Innenschlauch (Si) in den Außenschlauch (Sa) extrudiert wird und an den an der gewellten Formfläche anliegenden Außenschlauch (Sa) im Bereich der Wellentäler des Außenschlauchs (Sa) zur Anlage gebracht wird;
- dass zur Ausformung eines Muffenabschnitts zuerst der Außenschlauch (Sa) in die Muffenformfläche extrudiert wird und an der Muffenformfläche über die gesamte axiale Länge der Muffenformfläche zur Anlage gebracht wird und erst dann der Innenschlauch (Si) in den bereits über die gesamte axiale Länge der Muffenformfläche in Anlage liegenden Außenschlauch (Sa) extrudiert wird und dabei an der Innenseite des genannten an der Muffenformfläche bereits über die gesamte axiale Länge der Muffenformfläche in Anlage liegenden Außenschlauch (Sa) zur Anlage gebracht wird,
wobei,
a) der auf die Innenseite des Außenschlauchs (Sa) einwirkende Druck (pa) wie folgt gesteuert und/oder geregelt wird:
Schritt a1: kurz bevor oder zu Beginn der Extrusion des Außenschlauchs (Sa) in die Muffenformfläche wird der auf die Innenseite des Außenschlauchs (Sa) einwirkende Druck (pa) reduziert (pa2),
Schritt a2: während der Extrusion des Außenschlauchs (Sa) in die Muffenformfläche wird der auf die Innenseite des Außenschlauchs (Sa) einwirkende Druck (pa) derart variiert oder konstant gesteuert, dass er zumindest über den überwiegenden Teil der Zeitdauer der Extrusion des Außenschlauchs (Sa) in die Muffenformfläche über Atmosphärendruck liegt,
wobei vorgesehen ist,
dass der in Schritt a2 auf die Innenseite des Außenschlauchs (Sa) einwirkende Druck (pa) erhöht wird kurzzeitig bevor oder während oder kurzzeitig nach der Extrusion des Außenschlauchs (Sa) in die hintere Flanke der Muffenformfläche, und
dass nach Beendigung der in Schritt a2 erfolgten Extrusion des Außenschlauchs (Sa) in die Muffenformfläche, jedoch noch bevor der Innenschlauch (Si) in den an der Muffenformfläche bereits anliegenden Außenschlauch (Sa) extrudiert wird, der Außenschlauch (Sa) in eine oder mehrere an die Muffenformfläche entgegen der Produktionsrichtung X anschließende Wellenformfläche extrudiert wird und dabei der auf die Innenseite des Außenschlauchs (Sa) einwirkende Druck (pa) zumindest kurzzeitig erhöht wird,
Schritt a3: nachdem die Extrusion des Außenschlauchs (Sa) in die Muffenformfläche beendet ist, und zwar bevor oder zu Beginn der Extrusion des Innenschlauchs (Si) in den an der Muffenformfläche bereits anliegenden Außenschlauch (Sa) wird der auf die Innenseite des Außenschlauchs (Sa) einwirkende Druck (pa) auf Atmosphärendruck oder auf einen Druck, der in einem Bereich geringfügig über Atmosphärendruck liegt, reduziert, und
wobei vorgesehen ist,
dass die in Schritt a3 vorgesehene Reduktion des auf die Innenseite des Außenschlauchs einwirkenden Drucks (pa) erfolgt, noch bevor der Innenschlauch in den an der Muffenformfläche bereits anliegenden Außenschlauchs extrudiert wird und aber während dem der Außenschlauch (Sa) in eine oder mehrere an die Muffenformfläche entgegen der Produktionsrichtung X anschließende Wellenformfläche extrudiert wird,
Schritt a4: während der Extrusion des Innenschlauchs (Si) in den an der Muffenformfläche bereits anliegenden Außenschlauch (Sa) wird der auf die Innenseite des Außenschlauchs (Sa) einwirkende Druck (pa) zumindest über den überwiegenden Teil des Zeitraums der Extrusion des Innenschlauchs (Si) in den an der Muffenformfläche bereits anliegenden Außenschlauch (Sa) auf Atmosphärendruck oder auf einen konstanten oder variablen Druck, der in einem Bereich geringfügig über Atmosphärendruck liegt, gehalten, und
b) der auf die Innenseite des Innenschlauchs (Si) einwirkende Druck (pi) wie folgt gesteuert und/oder geregelt wird:
Schritt b1: kurz bevor oder zu Beginn der Extrusion des Innenschlauchs (Si) in den an der Muffenformfläche bereits anliegenden Außenschlauch (Sa) wird der auf die Innenseite des Innenschlauchs (Si) einwirkende Druck (pi) erhöht auf einen Druck (pi2) über Atmosphärendruck, und
Schritt b2: während der Extrusion des Innenschlauchs (Si) in den an der Muffenformfläche bereits anliegenden Außenschlauch (Sa) wird der auf die Innenseite des Innenschlauchs (Si) einwirkende Druck (pi) auf Überatmosphärendruck gehalten, und
Schritt b3: nachdem die Extrusion des Innenschlauchs (Si) in den an der Muffenformfläche bereits anliegenden Außenschlauch (Sa) beendet ist oder kurz davor, wird der auf die Innenseite des Innenschlauchs (Si) einwirkende Druck (pi) reduziert auf Atmosphärendruck oder einen Druck über Atmosphärendruck.

2. Verfahren zur Herstellung eines endlosen doppelwandigen aus vorzugsweise thermoplastischem Kunststoffmaterial bestehenden Rohres mit Wellrohrabschnitten und Muffenrohrabschnitten,
durch Extrusion eines das Außenrohr des doppelwandigen Rohres bildenden Außenschlauchs (Sa) und eines das Innenrohr des doppelwandigen Rohres bildenden Innenschlauchs (Si) in einem Formkanal (10) mit mindestens einem Abschnitt mit gewellter Formfläche und mindestens einem Abschnitt mit vorzugsweise glatter, zylindrischer oder leicht konischer Muffenformfläche;
wobei vorgesehen ist,
- dass zur Ausformung eines Wellrohrabschnitts der Außenschlauch (Sa) in die gewellte Formfläche extrudiert wird und an der gewellten Formfläche zur Anlage gebracht wird, und der Innenschlauch (Si) in den Außenschlauch (Sa) extrudiert wird und an den an der gewellten Formfläche anliegenden Außenschlauch (Sa) im Bereich der Wellentäler des Außenschlauchs (Sa) zur Anlage gebracht wird;
- dass zur Ausformung eines Muffenabschnitts zuerst der Außenschlauch (Sa) in die Muffenformfläche extrudiert wird und an der Muffenformfläche über die gesamte axiale Länge der Muffenformfläche zur Anlage gebracht wird und erst dann der Innenschlauch (Si) in den bereits über die gesamte axiale Länge der Muffenformfläche in Anlage liegenden Außenschlauch (Sa) extrudiert wird und dabei an der Innenseite des genannten an der Muffenformfläche bereits über die gesamt axiale Länge der Muffenformfläche in Anlage liegenden Außenschlauch (Sa) zur Anlage gebracht wird,
wobei,
a) der auf die Innenseite des Außenschlauchs (Sa) einwirkende Druck (pa) wie folgt gesteuert und/oder geregelt wird:
Schritt a1: kurz bevor oder zu Beginn der Extrusion des Außenschlauchs (Sa) in die Muffenformfläche wird der auf die Innenseite des Außenschlauchs (Sa) einwirkende Druck (pa) reduziert (pa2),
Schritt a2: während der Extrusion des Außenschlauchs (Sa) in die Muffenformfläche wird der auf die Innenseite des Außenschlauchs (Sa) einwirkende Druck (pa) derart variiert oder konstant gesteuert, dass er zumindest über den überwiegenden Teil der Zeitdauer der Extrusion des Außenschlauchs (Sa) in die Muffenformfläche über Atmosphärendruck liegt,
Schritt a3: nachdem die Extrusion des Außenschlauchs (Sa) in die Muffenformfläche beendet ist, und zwar bevor oder zu Beginn der Extrusion des Innenschlauchs (Si) in den an der Muffenformfläche bereits anliegenden Außenschlauch (Sa) wird der auf die Innenseite des Außenschlauchs (Sa) einwirkende Druck (pa) auf Atmosphärendruck oder auf einen Druck, der in einem Bereich geringfügig über Atmosphärendruck liegt, reduziert, und
Schritt a4: während der Extrusion des Innenschlauchs (Si) in den an der Muffenformfläche bereits anliegenden Außenschlauch (Sa) wird der auf die Innenseite des Außenschlauchs (Sa) einwirkende Druck (pa) zumindest über den überwiegenden Teil des Zeitraums der Extrusion des Innenschlauchs (Si) in den an der Muffenformfläche bereits anliegenden Außenschlauch (Sa) auf Atmosphärendruck oder auf einen konstanten oder variablen Druck, der in einem Bereich geringfügig über Atmosphärendruck liegt, gehalten, und
b) der auf die Innenseite des Innenschlauchs (Si) einwirkende Druck (pi) wie folgt gesteuert und/oder geregelt wird:
Schritt b1: kurz bevor oder zu Beginn der Extrusion des Innenschlauchs (Si) in den an der Muffenformfläche bereits anliegenden Außenschlauch (Sa) wird der auf die Innenseite des Innenschlauchs (Si) einwirkende Druck (pi) erhöht auf einen Druck (pi2) über Atmosphärendruck, und
Schritt b2: während der Extrusion des Innenschlauchs (Si) in den an der Muffenformfläche bereits anliegenden Außenschlauch (Sa) wird der auf die Innenseite des Innenschlauchs (Si) einwirkende Druck (pi) auf Überatmosphärendruck gehalten, und
wobei vorgesehen ist,
dass der auf die Innenseite des Innenschlauchs (Si) in Schritt b2 einwirkende Überatmosphärendruck (pi) zum Ende der Muffenausformung des Innenschlauchs nochmals deutlich erhöht wird,
Schritt b3: nachdem die Extrusion des Innenschlauchs (Si) in den an der Muffenformfläche bereits anliegenden Außenschlauch (Sa) beendet ist oder kurz davor, wird der auf die Innenseite des Innenschlauchs (Si) einwirkende Druck (pi) reduziert auf Atmosphärendruck oder einen Druck über Atmosphärendruck.

3. Verfahren nach Anspruch 1 oder 2,
**dadurch gekennzeichnet,**
**dass** der in Schritt a2 auf die Innenseite des Außenschlauchs (Sa) einwirkende Druck (pa), währenddem der Außenschlauch (Sa) in den zylindrischen oder konischen Längenabschnitt der Muffenformfläche extrudiert wird, jeweils kleiner ist als ein Druck (pa1), der auf die Innenseite des Außenschlauchs (Sa) als konstanter Druckwert PA1 oder als Druckmittelwert einwirkt während der Wellenausformung des Außenschlauchs (Sa), die der Muffenausformung des Außenschlauchs vorangeht.

4. Verfahren nach einem der Ansprüche 1 bis 3,
**dadurch gekennzeichnet,**
**dass** der in Schritt a2 auf die Innenseite des Außenschlauchs (Sa) einwirkende Druck (pa), währenddem der Außenschlauch (Sa) in den zylindrischen oder konischen Längenabschnitt der Muffenformfläche extrudiert wird, alternierend ist zwischen einem oberen Druckwert und einem unteren Druckwert.

5. Verfahren nach Anspruch 4,
**dadurch gekennzeichnet,**
**dass** der obere Druckwert kleiner oder gleich ist einem Druckwert PA1, der auf die Innenseite des Außenschlauchs (Sa) als konstanter Druckwert oder als Druckmittelwert einwirkt während der Wellenausformung des Außenschlauchs (Sa), die der Muffenausformung des Außenschlauchs (Sa) unmittelbar vorangeht.

6. Verfahren nach einem der Ansprüche 4 oder 5,
**dadurch gekennzeichnet,**
**dass** der untere Druckwert größer oder gleich Atmosphärendruck ist.

7. Verfahren nach einem der vorangehenden Ansprüche,
**dadurch gekennzeichnet,**
**dass** der in Schritt a2 auf die Innenseite des Außenschlauchs (Sa) einwirkende Druck (pa) erhöht wird kurzzeitig nach der Extrusion des Außenschlauchs (Sa) in die vordere Flanke des Übergangsbereichs der Muffenformfläche und/oder kurzzeitig vor oder während der Extrusion des Außenschlauchs (Sa) in den dem zylindrischen Längenabschnitt der Muffenformfläche vorgeschalteten abgerundeten Radiusbereich.

8. Verfahren nach Anspruch 7,
**dadurch gekennzeichnet,**
**dass** die gemäß Anspruch 7 vorgesehene Erhöhung des auf die Innenseite des Außenschlauchs (Sa) einwirkenden Drucks (pa) auf einen Druck (pa2) erfolgt, der größer oder gleich ist einem Druckwert PA1, der auf die Innenseite des Außenschlauchs (Sa) als konstanter Druckwert oder als Druckmittelwert einwirkt während der Wellenausformung des Außenschlauchs (Sa), die der Muffenausformung vorangeht.

9. Verfahren nach einem der Ansprüche 2 bis 8,
**dadurch gekennzeichnet,**
**dass** der in Schritt a2 auf die Innenseite des Außenschlauchs (Sa) einwirkende Druck (pa) erhöht wird kurzzeitig bevor oder während oder kurzzeitig nach der Extrusion des Außenschlauchs (Sa) in die hintere Flanke der Muffenformfläche.

10. Verfahren nach Anspruch 9,
**dadurch gekennzeichnet,**
**dass** die gemäß Anspruch 9 vorgesehene Erhöhung des auf die Innenseite des Außenschlauchs (Sa) einwirkenden Drucks (pa) auf einen Druck (pa2) erfolgt, der höher oder gleich ist einem Druckwert PA1, der auf die Innenseite des Außenschlauchs als konstanter Druckwert oder als Druckmittelwert einwirkt während der Wellenausformung des Außenschlauchs (Sa), die der Muffenausformung des Außenschlauchs (Sa) vorangeht.

11. Verfahren nach einem der Ansprüche 2 bis 10,
**dadurch gekennzeichnet,**
**dass** nach Beendigung der in Schritt a2 erfolgten Extrusion des Außenschlauchs (Sa) in die Muffenformfläche, jedoch noch bevor der Innenschlauch (Si) in den an der Muffenformfläche bereits anliegenden Außenschlauch (Sa) extrudiert wird, der Außenschlauch (Sa) in eine oder mehrere an die Muffenformfläche entgegen der Produktionsrichtung X anschließende Wellenformfläche extrudiert wird und dabei der auf die Innenseite des Außenschlauchs (Sa) einwirkende Druck (pa) zumindest kurzzeitig erhöht wird.

12. Verfahren nach Anspruch 11,
**dadurch gekennzeichnet,**
**dass** die gemäß Anspruch 11 vorgesehene Erhöhung des auf die Innenseite des Außenschlauchs (Sa) einwirkenden Drucks auf einen Druck (pa2) erfolgt, der über einem Druckwert PA1 liegt, der auf die Innenseite des Außenschlauchs (Sa) als konstanter Druckwert oder als Druckmittelwert einwirkt während der Wellenausformung des Außenschlauchs (Sa), die der Muffenausformung des Außenschlauchs (Sa) unmittelbar vorangeht.

13. Verfahren nach einem der Ansprüche 2 bis 12,
**dadurch gekennzeichnet,**
**dass** die in Schritt a3 vorgesehene Reduktion des auf die Innenseite des Außenschlauchs einwirkenden Drucks (pa) erfolgt, noch bevor der Innenschlauch in den an der Muffenformfläche bereits anliegenden Außenschlauchs extrudiert wird und aber während dem der Außenschlauch (Sa) in eine oder mehrere an die Muffenformfläche entgegen der Produktionsrichtung X anschließende Wellenformfläche extrudiert wird.

14. Verfahren nach einem der vorangehenden Ansprüche,
**dadurch gekennzeichnet,**
**dass** während in Schritt a4 der Innenschlauch (Si) in den an der Muffenformfläche bereits anliegenden Außenschlauch (Sa) extrudiert wird, der Außenschlauch in eine oder mehrere an die Muffenformfläche entgegen der Produktionsrichtung anschließende Wellenformflächen extrudiert wird mit auf die Innenseite des Außenschlauchs (Sa) einwirkendem Atmosphärendruck oder nahe Atmosphärendruck liegendem Überdruck, wobei die Anlage des Außenschlauchs (Sa) an die Wellenformfläche unter Einwirkung von Vakuum oder Teilvakuum erfolgt, das im Bereich der Wellenformfläche auf die Außenseite des Außenschlauchs (Sa) einwirkt.

15. Verfahren nach einem der vorangehenden Ansprüche,
**dadurch gekennzeichnet,**
**dass** über die gesamte Zeit der in Schritt a2 erfolgten Extrusion des Außenschlauchs (Sa) in die Muffenformfläche der auf die Innenseite des Außenschlauchs (Sa) einwirkende Druck (pa) über Atmosphärendruck gehalten wird.

16. Verfahren nach einem der vorangehenden Ansprüche,
**dadurch gekennzeichnet,**
**dass** über die gesamte Zeit der in Schritt b2 erfolgenden Extrusion des Innenschlauchs (Si) in den an der Muffenformfläche bereits anliegenden Außenschlauch (Sa) der auf die Innenseite des Außenschlauchs (Sa) einwirkende Druck (pa)
entweder auf Atmosphärendruck gehalten wird, oder
auf einem geregelten Druck (pa2) eingestellt wird, der über Atmosphärendruck liegt und aber zum Ende der Muffenausformung auf Atmosphärendruck reduziert wird.

17. Verfahren nach einem der vorangehenden Ansprüche,
**dadurch gekennzeichnet,**
**dass** die Erhöhung des auf die Innenseite des Innenschlauchs (Si) einwirkenden Drucks auf einen Druck (pi2) über Atmosphärendruck in Schritt b1 als ein langsamer Druckanstieg ausgebildet ist.

18. Verfahren nach einem der Ansprüche 1 oder 3 bis 17,
**dadurch gekennzeichnet,**
**dass** der auf die Innenseite des Innenschlauchs (Si) in Schritt b2 einwirkende Überatmosphärendruck (pi) zum Ende der Muffenausformung des Innenschlauchs nochmals deutlich erhöht wird.

19. Vorrichtung zur Herstellung eines endlosen doppelwandigen aus vorzugsweise thermoplastischen Kunststoff bestehenden Rohres mit Wellrohrabschnitten und Muffenrohrabschnitten zur Durchführung des Verfahrens nach einem der vorangehenden Ansprüche,
mit einem Formkanal (10), der aus Formflächen von umlaufenden Formbackenpaaren (1n, 1m) gebildet wird, wobei mindestens ein Abschnitt des Formkanals (10) gewellte Formfläche und mindestens ein weiterer Abschnitt des Formkanals (10), vorzugsweise glatte zylindrische oder leicht konische Muffenformfläche aufweist,
mit einer Extrusionseinrichtung mit Spritzkopf (5), der eine erste Düse (5a) zur Extrusion des Außenschlauchs (Sa) und eine zweite Düse (5i) zur Extrusion des Innenschlauchs (Si) aufweist, wobei die zweite Düse (5i) der ersten Düse (5a) in Bewegungsrichtung (X) der im Formkanal (10) geführten Formbacken (1n, 1m) nachgeschaltet ist,
mit einem zwischen der ersten Düse (5a) und der zweiten Düse (5i) in den Formkanal (10) mündenden ersten Luftkanal (5ak) zur Zuführung einer Stützluft, die mit der Innenseite des Außenschlauchs (Sa) zusammenwirkt und einem der zweiten Düse (5i) in Bewegungsrichtung (X) der in dem Formkanal (10) geführten Formbacken (1n, 1m) nachgeschalteten, ebenfalls in den Formkanal (10) mündenden zweiten Luftkanal (5ik) zur Zuführung einer Stützluft, die mit der Innenseite des Innenschlauchs (Si) zusammenwirkt
wobei vorgesehen ist,
dass der axiale Abstand zwischen der ersten Düse (5a) und der zweiten Düse (5i) größer oder gleich ist als bzw. wie die axiale Längserstreckung des die Muffenformfläche aufweisenden Abschnitts (1m) des Formkanals (10),
wobei,
(v1) die mit der Innenseite des Außenschlauchs (Sa) zusammenwirkende Stützluft mit einem mit dem ersten Luftkanal (5ak) verbundenen ersten Druckregler verbunden ist und
die mit der Innenseite des Innenschlauchs (Si) zusammenwirkende Stützluft mit einem mit dem zweiten Luftkanal (5ik) verbundenen zweiten Druckregler verbunden ist.
(v2) der erste und der zweite Druckregler mit einer vorzugsweise elektronischen Steuerungsvorrichtung zur Steuerung der Druckregler verbunden sind, wobei die Steuerungsvorrichtung ein Steuerprogramm aufweist, welches ein Teil der Steuerungsvorrichtung darstellt, indem die Steuerungsvorrichtung mit dem Steuerprogramm programmiert ist und die Steuerungsvorrichtung mit dem Steuerprogramm in Verbindung mit den Druckreglern derart ausgelegt und mit dem Steuerprogramm derart ausgebildet ist,
dass die Innenseite des Außenschlauchs mit einem gesteuerten und/oder geregelten Druck (pa) gemäß den Schritten a1, a2, a3 und a4 beaufschlagt wird, und die Innenseite des Innenschlauchs mit einem gesteuerten und/oder geregelten Druck (pi) gemäß den Schritten b1, b2 und b3 beaufschlagt wird, wobei die Schritte a1 bis a4 wie folgt definiert sind:
Schritt a1: kurz bevor oder zu Beginn der Extrusion des Außenschlauchs (Sa) in die Muffenformfläche wird der auf die Innenseite des Außenschlauchs (Sa) einwirkende Druck (pa) reduziert (pa2),
Schritt a2: während der Extrusion des Außenschlauchs (Sa) in die Muffenformfläche wird der auf die Innenseite des Außenschlauchs (Sa) einwirkende Druck (pa) derart variiert oder konstant gesteuert, dass er zumindest über den überwiegenden Teil der Zeitdauer der Extrusion des Außenschlauchs (Sa) in die Muffenformfläche über Atmosphärendruck liegt,
wobei vorgesehen ist,
dass der in Schritt a2 auf die Innenseite des Außenschlauchs (Sa) einwirkende Druck (pa) erhöht wird kurzzeitig bevor oder während oder kurzzeitig nach der Extrusion des Außenschlauchs (Sa) in die hintere Flanke der Muffenformfläche, und
dass nach Beendigung der in Schritt a2 erfolgten Extrusion des Außenschlauchs (Sa) in die Muffenformfläche, jedoch noch bevor der Innenschlauch (Si) in den an der Muffenformfläche bereits anliegenden Außenschlauch (Sa) extrudiert wird, der Außenschlauch (Sa) in eine oder mehrere an die Muffenformfläche entgegen der Produktionsrichtung X anschließende Wellenformfläche extrudiert wird und dabei der auf die Innenseite des Außenschlauchs (Sa) einwirkende Druck (pa) zumindest kurzzeitig erhöht wird,
Schritt a3: nachdem die Extrusion des Außenschlauchs (Sa) in die Muffenformfläche beendet ist, und zwar bevor oder zu Beginn der Extrusion des Innenschlauchs (Si) in den an der Muffenformfläche bereits anliegenden Außenschlauch (Sa) wird der auf die Innenseite des Außenschlauchs (Sa) einwirkende Druck (pa) auf Atmosphärendruck oder auf einen Druck, der in einem Bereich geringfügig über Atmosphärendruck liegt, reduziert, und
Schritt a4: während der Extrusion des Innenschlauchs (Si) in den an der Muffenformfläche bereits anliegenden Außenschlauch (Sa) wird der auf die Innenseite des Außenschlauchs (Sa) einwirkende Druck (pa) zumindest über den überwiegenden Teil des Zeitraums der Extrusion des Innenschlauchs (Si) in den an der Muffenformfläche bereits anliegenden Außenschlauch (Sa) auf Atmosphärendruck oder auf einen konstanten oder variablen Druck, der in einem Bereich geringfügig über Atmosphärendruck liegt, gehalten,
wobei die Schritte b1 bis 3 wie folgt definiert sind:
Schritt b1: kurz bevor oder zu Beginn der Extrusion des Innenschlauchs (Si) in den an der Muffenformfläche bereits anliegenden Außenschlauch (Sa) wird der auf die Innenseite des Innenschlauchs (Si) einwirkende Druck (pi) erhöht auf einen Druck (pi2) über Atmosphärendruck, und
Schritt b2: während der Extrusion des Innenschlauchs (Si) in den an der Muffenformfläche bereits anliegenden Außenschlauch (Sa) wird der auf die Innenseite des Innenschlauchs (Si) einwirkende Druck (pi) auf Überatmosphärendruck gehalten, und
Schritt b3: nachdem die Extrusion des Innenschlauchs (Si) in den an der Muffenformfläche bereits anliegenden Außenschlauch (Sa) beendet ist oder kurz davor, wird der auf die Innenseite des Innenschlauchs (Si) einwirkende Druck (pi) reduziert auf Atmosphärendruck oder einen Druck über Atmosphärendruck.

20. Vorrichtung zur Herstellung eines endlosen doppelwandigen aus vorzugsweise thermoplastischen Kunststoff bestehenden Rohres mit Wellrohrabschnitten und Muffenrohrabschnitten zur Durchführung des Verfahrens nach einem der Ansprüche 1 bis 18,
mit einem Formkanal (10), der aus Formflächen von umlaufenden Formbackenpaaren (1n, 1m) gebildet wird, wobei mindestens ein Abschnitt des Formkanals (10) gewellte Formfläche und mindestens ein weiterer Abschnitt des Formkanals (10), vorzugsweise glatte zylindrische oder leicht konische Muffenformfläche aufweist,
mit einer Extrusionseinrichtung mit Spritzkopf (5), der eine erste Düse (5a) zur Extrusion des Außenschlauchs (Sa) und eine zweite Düse (5i) zur Extrusion des Innenschlauchs (Si) aufweist, wobei die zweite Düse (5i) der ersten Düse (5a) in Bewegungsrichtung (X) der im Formkanal (10) geführten Formbacken (1n, 1m) nachgeschaltet ist,
mit einem zwischen der ersten Düse (5a) und der zweiten Düse (5i) in den Formkanal (10) mündenden ersten Luftkanal (5ak) zur Zuführung einer Stützluft, die mit der Innenseite des Außenschlauchs (Sa) zusammenwirkt und einem der zweiten Düse (5i) in Bewegungsrichtung (X) der in dem Formkanal (10) geführten Formbacken (1n, 1m) nachgeschalteten, ebenfalls in den Formkanal (10) mündenden zweiten Luftkanal (5ik) zur Zuführung einer Stützluft, die mit der Innenseite des Innenschlauchs (Si) zusammenwirkt
wobei vorgesehen ist,
dass der axiale Abstand zwischen der ersten Düse (5a) und der zweiten Düse (5i) größer oder gleich ist als bzw. wie die axiale Längserstreckung des die Muffenformfläche aufweisenden Abschnitts (1m) des Formkanals (10),
wobei,
(v1) die mit der Innenseite des Außenschlauchs (Sa) zusammenwirkende Stützluft mit einem mit dem ersten Luftkanal (5ak) verbundenen ersten Druckregler verbunden ist und
die mit der Innenseite des Innenschlauchs (Si) zusammenwirkende Stützluft mit einem mit dem zweiten Luftkanal (5ik) verbundenen zweiten Druckregler verbunden ist.
(v2) der erste und der zweite Druckregler mit einer vorzugsweise elektronischen Steuerungsvorrichtung zur Steuerung der Druckregler verbunden sind, wobei die Steuerungsvorrichtung ein Steuerprogramm aufweist, welches ein Teil der Steuerungsvorrichtung darstellt, indem die Steuerungsvorrichtung mit dem Steuerprogramm programmiert ist und die Steuerungsvorrichtung mit dem Steuerprogramm in Verbindung mit den Druckreglern derart ausgelegt und mit dem Steuerprogramm derart ausgebildet ist,
dass die Innenseite des Außenschlauchs mit einem gesteuerten und/oder geregelten Druck (pa) gemäß den Schritten a1, a2, a3 und a4 beaufschlagt wird, und die Innenseite des Innenschlauchs mit einem gesteuerten und/oder geregelten Druck (pi) gemäß den Schritten b1, b2 und b3 beaufschlagt wird, wobei die Schritte a1 bis a4 wie folgt definiert sind:
Schritt a1: kurz bevor oder zu Beginn der Extrusion des Außenschlauchs (Sa) in die Muffenformfläche wird der auf die Innenseite des Außenschlauchs (Sa) einwirkende Druck (pa) reduziert (pa2),
Schritt a2: während der Extrusion des Außenschlauchs (Sa) in die Muffenformfläche wird der auf die Innenseite des Außenschlauchs (Sa) einwirkende Druck (pa) derart variiert oder konstant gesteuert, dass er zumindest über den überwiegenden Teil der Zeitdauer der Extrusion des Außenschlauchs (Sa) in die Muffenformfläche über Atmosphärendruck liegt,
Schritt a3: nachdem die Extrusion des Außenschlauchs (Sa) in die Muffenformfläche beendet ist, und zwar bevor oder zu Beginn der Extrusion des Innenschlauchs (Si) in den an der Muffenformfläche bereits anliegenden Außenschlauch (Sa) wird der auf die Innenseite des Außenschlauchs (Sa) einwirkende Druck (pa) auf Atmosphärendruck oder auf einen Druck, der in einem Bereich geringfügig über Atmosphärendruck liegt, reduziert, und
Schritt a4: während der Extrusion des Innenschlauchs (Si) in den an der Muffenformfläche bereits anliegenden Außenschlauch (Sa) wird der auf die Innenseite des Außenschlauchs (Sa) einwirkende Druck (pa) zumindest über den überwiegenden Teil des Zeitraums der Extrusion des Innenschlauchs (Si) in den an der Muffenformfläche bereits anliegenden Außenschlauch (Sa) auf Atmosphärendruck oder auf einen konstanten oder variablen Druck, der in einem Bereich geringfügig über Atmosphärendruck liegt, gehalten,
wobei die Schritte b1 bis 3 wie folgt definiert sind:
Schritt b1: kurz bevor oder zu Beginn der Extrusion des Innenschlauchs (Si) in den an der Muffenformfläche bereits anliegenden Außenschlauch (Sa) wird der auf die Innenseite des Innenschlauchs (Si) einwirkende Druck (pi) erhöht auf einen Druck (pi2) über Atmosphärendruck, und
Schritt b2: während der Extrusion des Innenschlauchs (Si) in den an der Muffenformfläche bereits anliegenden Außenschlauch (Sa) wird der auf die Innenseite des Innenschlauchs (Si) einwirkende Druck (pi) auf Überatmosphärendruck gehalten, und
wobei vorgesehen ist,
dass der auf die Innenseite des Innenschlauchs (Si) in Schritt b2 einwirkende Überatmosphärendruck (pi) zum Ende der Muffenausformung des Innenschlauchs nochmals deutlich erhöht wird,
Schritt b3: nachdem die Extrusion des Innenschlauchs (Si) in den an der Muffenformfläche bereits anliegenden Außenschlauch (Sa) beendet ist oder kurz davor, wird der auf die Innenseite des Innenschlauchs (Si) einwirkende Druck (pi) reduziert auf Atmosphärendruck oder einen Druck über Atmosphärendruck.

21. Vorrichtung nach Anspruch 19 oder 20,
**dadurch gekennzeichnet,**
**dass** mindestens einer der Druckregler, vorzugsweise jeweils der erste und der zweite Druckregler ein elektronisch gesteuertes Druckregelventil, vorzugsweise Proportionalventil aufweist, über das ein Druck über Atmosphärendruck und/oder ein Druck über Atmosphärendruck einschließlich Atmosphärendruck in dem zugeordneten Raum konstant und/oder variabel regelbar ist.

22. Vorrichtung nach einem der Ansprüche 19 bis 21,
**dadurch gekennzeichnet,**
**dass** der Druckregler ein Umschaltventil aufweist, das in geöffneter Stellung den dem Druckregler zugeordneten Raum mit Atmosphäre verbindet.

23. Vorrichtung nach Anspruch 22,
**dadurch gekennzeichnet,**
**dass** das Umschaltventil und das elektronisch gesteuerte Druckregelventil, vorzugsweise Proportionalventil mit dem zugeordneten Raum so verbunden ist, dass bei geöffnetem Umschaltventil in dem zugeordneten Raum Atmosphärendruck eingestellt wird unabhängig von der Stellung des Proportionalventils.

## Claims

1. Method for producing a continuous double-walled pipe, which is made of preferably thermoplastic plastic material and has corrugated pipe segments and sleeve pipe segments,
by extruding an outer tube (Sa), which forms the outer pipe of the double-walled pipe, and an inner tube (Si), which forms the inner pipe of the double-walled pipe, in a moulding channel (10), which has at least one segment having a corrugated moulding surface and at least one segment having a preferably smooth, cylindrical or slightly conical sleeve moulding surface;
wherein it is provided that
- in order to shape a corrugated pipe segment, the outer tube (Sa) is extruded into the corrugated moulding surface and is brought into contact with the corrugated moulding surface, and the inner tube (Si) is extruded into the outer tube (Sa) and, in the region of the corrugation valleys of the outer tube (Sa), is brought into contact with the outer tube (Sa) in contact with the corrugated moulding surface;
- in order to shape a sleeve segment, the outer tube (Sa) is firstly extruded into the sleeve moulding surface and is then brought into contact with the sleeve moulding surface over the entire axial length of the sleeve moulding surface and only then is the inner tube (Si) extruded into the outer tube (Sa) already in contact over the entire axial length of the sleeve moulding surface and in so doing is brought into contact with the inner side of said outer tube (Sa) already in contact with the sleeve moulding surface over the entire axial length of the sleeve moulding surface,
wherein
a) the pressure (pa) acting on the inner side of the outer tube (Sa) is controlled by open-loop and/or closed-loop control as follows:
step a1: just before or at the start of the extrusion of the outer tube (Sa) into the sleeve moulding surface, the pressure (pa) acting on the inner side of the outer tube (Sa) is reduced (pa2),
step a2: during the extrusion of the outer tube (Sa) into the sleeve moulding surface, the pressure (pa) acting on the inner side of the outer tube (Sa) is varied or consistently controlled in such a way that it is above atmospheric pressure at least for the majority of the duration of the extrusion of the outer tube (Sa) into the sleeve moulding surface,
wherein it is provided that
the pressure (pa) acting in step a2 on the inner side of the outer tube (Sa) is increased temporarily before or during or temporarily after the extrusion of the outer tube (Sa) into the rear flank of the sleeve moulding surface, and
after completion of the extrusion, performed in step a2, of the outer tube (Sa) into the sleeve moulding surface, but before the inner tube (Si) is extruded into the outer tube (Sa) already in contact with the sleeve moulding surface, the outer tube (Sa) is extruded into one or more corrugated moulding surface(s) adjoining the sleeve moulding surface against the production direction X and in so doing the pressure (pa) acting on the inner side of the outer tube (Sa) is increased at least temporarily,
step a3: once the extrusion of the outer tube (Sa) into the sleeve moulding surface is complete, more specifically before or at the start of the extrusion of the inner tube (Si) into the outer tube (Sa) already in contact with the sleeve moulding surface, the pressure (pa) acting on the inner side of the outer tube (Sa) is reduced to atmospheric pressure or to a pressure that lies in a range slightly above atmospheric pressure, and wherein it is provided that
the reduction, provided in step a3, of the pressure (pa) acting on the inner side of the outer tube is performed before the inner tube is extruded into the outer tube already in contact with the sleeve moulding surface, but while the outer tube (Sa) is being extruded into one or more corrugated moulding surface(s) adjoining the sleeve moulding surface against the production direction X,
step a4: during the extrusion of the inner tube (Si) into the outer tube (Sa) already in contact with the sleeve moulding surface, the pressure (pa) acting on the inner side of the outer tube (Sa) is held, at least over the majority of the period of the extrusion of the inner tube (Si) into the outer tube (Sa) already in contact with the sleeve moulding surface, at atmospheric pressure or at a constant or variable pressure lying in a range slightly above atmospheric pressure, and b) the pressure (pi) acting on the inner side of the inner tube (Si) is controlled by open-loop and/or closed-loop control as follows:
step b1: just before or at the start of the extrusion of the inner tube (Si) into the outer tube (Sa) already in contact with the sleeve moulding surface, the pressure (pi) acting on the inner side of the inner tube (Si) is increased to a pressure (pi2) above atmospheric pressure, and
step b2: during the extrusion of the inner tube (Si) into the outer tube (Sa) already in contact with the sleeve moulding surface, the pressure (pi) acting on the inner side of the inner tube (Si) is held above atmospheric pressure, and
step b3: once the extrusion of the inner tube (Si) into the outer tube (Sa) already in contact with the sleeve moulding surface is complete, or just before, the pressure (pi) acting on the inner side of the inner tube (Si) is reduced to atmospheric pressure or a pressure above atmospheric pressure.

2. Method for producing a continuous double-walled pipe, which is made of preferably thermoplastic plastic material and has corrugated pipe segments and sleeve pipe segments,
by extruding an outer tube (Sa), which forms the outer pipe of the double-walled pipe, and an inner tube (Si), which forms the inner pipe of the double-walled pipe, in a moulding channel (10), which has at least one segment having a corrugated moulding surface and at least one segment having a preferably smooth, cylindrical or slightly conical sleeve moulding surface;
wherein it is provided that
- in order to shape a corrugated pipe segment, the outer tube (Sa) is extruded into the corrugated moulding surface and is brought into contact with the corrugated moulding surface and the inner tube (Si) is extruded into the outer tube (Sa) and in the region of the corrugation valleys of the outer tube (Sa) is brought into contact with the outer tube (Sa) in contact with the corrugated moulding surface;
- in order to shape a sleeve segment, the outer tube (Sa) is firstly extruded into the sleeve moulding surface and is then brought into contact with the sleeve moulding surface over the entire axial length of the sleeve moulding surface and only then is the inner tube (Si) extruded into the outer tube (Sa) already in contact over the entire axial length of the sleeve moulding surface and in so doing is brought into contact with the inner side of said outer tube (Sa) already in contact with the sleeve moulding surface over the entire axial length of the sleeve moulding surface,
wherein
a) the pressure (pa) acting on the inner side of the outer tube (Sa) is controlled by open-loop and/or closed-loop control as follows:
step a1: just before or at the start of the extrusion of the outer tube (Sa) into the sleeve moulding surface, the pressure (pa) acting on the inner side of the outer tube (Sa) is reduced (pa2),
step a2: during the extrusion of the outer tube (Sa) into the sleeve moulding surface, the pressure (pa) acting on the inner side of the outer tube (Sa) is varied or consistently controlled in such a way that it is above atmospheric pressure at least for the majority of the duration of the extrusion of the outer tube (Sa) into the sleeve moulding surface,
step a3: once the extrusion of the outer tube (Sa) into the sleeve moulding surface is complete, more specifically before or at the start of the extrusion of the inner tube (Si) into the outer tube (Sa) already in contact with the sleeve moulding surface, the pressure (pa) acting on the inner side of the outer tube (Sa) is reduced to atmospheric pressure or to a pressure that lies in a range slightly above atmospheric pressure, and
step a4: during the extrusion of the inner tube (Si) into the outer tube (Sa) already in contact with the sleeve moulding surface, the pressure (pa) acting on the inner side of the outer tube (Sa) is held, at least over the majority of the period of the extrusion of the inner tube (Si) into the outer tube (Sa) already in contact with the sleeve moulding surface, at atmospheric pressure or at a constant or variable pressure lying in a range slightly above atmospheric pressure, and
b) the pressure (pi) acting on the inner side of the inner tube (Si) is controlled by open-loop and/or closed-loop control as follows:
step b1: just before or at the start of the extrusion of the inner tube (Si) into the outer tube (Sa) already in contact with the sleeve moulding surface, the pressure (pi) acting on the inner side of the inner tube (Si) is increased to a pressure (pi2) above atmospheric pressure, and
step b2: during the extrusion of the inner tube (Si) into the outer tube (Sa) already in contact with the sleeve moulding surface, the pressure (pi) acting on the inner side of the inner tube (Si) is held above atmospheric pressure, and
wherein it is provided that
the pressure (pi) above atmospheric pressure acting on the inner side of the inner tube (Si) in step b2 is again increased significantly towards the end of the sleeve shaping of the inner tube,
step b3: once the extrusion of the inner tube (Si) into the outer tube (Sa) already in contact with the sleeve moulding surface is complete, or just before, the pressure (pi) acting on the inner side of the inner tube (Si) is reduced to atmospheric pressure or a pressure above atmospheric pressure.

3. Method according to claim 1 or 2,
**characterised in that**
the pressure (pa) acting on the inner side of the outer tube (Sa) in step a2, while the outer tube (Sa) is being extruded into the cylindrical or conical length segment of the sleeve moulding surface, is smaller than a pressure (pa1) acting on the inner side of the outer tube (Sa) as constant pressure value PA1 or as mean pressure value during the corrugation shaping of the outer tube (Sa), which precedes the sleeve shaping of the outer tube.

4. Method according to any one of claims 1 to 3,
**characterised in that**
the pressure (pa) acting on the inner side of the outer tube (Sa) in step a2 while the outer tube (Sa) is extruded into the cylindrical or conical length segment of the sleeve moulding surface alternates between an upper pressure value and a lower pressure value.

5. Method according to claim 4,
**characterised in that**
the upper pressure value is smaller than or equal to a pressure value PA1, which on the inner side of the outer tube (Sa) acts as a constant pressure value or as a mean pressure value during the corrugation shaping of the outer tube (Sa), which immediately precedes the sleeve shaping of the outer tube (Sa).

6. Method according to either one of claims 4 or 5,
**characterised in that**
the lower pressure value is greater than or equal to atmospheric pressure.

7. Method according to any one of the preceding claims,
**characterised in that**
the pressure (pa) acting on the inner side of the outer tube (Sa) in step a2 is increased temporarily after the extrusion of the outer tube (Sa) into the front flank of the transition region of the sleeve moulding surface and/or temporarily before or during the extrusion of the outer tube (Sa) into the rounded radius region upstream of the cylindrical length segment of the sleeve moulding surface.

8. Method according to claim 7,
**characterised in that**
the increase, provided in accordance with claim 7, of the pressure (pa) acting on the inner side of the outer tube (Sa) is performed to a pressure (pa2) which is greater than or equal to a pressure value PA1 which acts on the inner side of the outer tube (Sa) as constant pressure value or as mean pressure value during the corrugation shaping of the outer tube (Sa), which precedes the sleeve shaping.

9. Method according to any one of claims 2 to 8,
**characterised in that**
the pressure (pa) acting in step a2 on the inner side of the outer tube (Sa) is increased temporarily before or during or temporarily after the extrusion of the outer tube (Sa) into the rear flank of the sleeve moulding surface.

10. Method according to claim 9,
**characterised in that**
the increase, provided in accordance with claim 9, of the pressure (pa) acting on the inner side of the outer tube (Sa) is performed to a pressure (pa2) that is greater than or equal to a pressure value PA1 which acts on the inner side of the outer tube as constant pressure value or as mean pressure value during the corrugation shaping of the outer tube (Sa), which precedes the sleeve shaping of the outer tube (Sa).

11. Method according to any one of claims 2 to 10,
**characterised in that**
following completion of the extrusion, performed in step a2, of the outer tube (Sa) into the sleeve moulding surface, but before the inner tube (Si) is extruded into the outer tube (Sa) already in contact with the sleeve moulding surface, the outer tube (Sa) is extruded into one or more corrugation moulding surface(s) adjoining the sleeve moulding surface against the production direction X and in so doing the pressure (pa) acting on the inner side of the outer tube (Sa) is increased at least temporarily.

12. Method according to claim 11,
**characterised in that**
the increase, provided in accordance with claim 11, of the pressure acting on the inner side of the outer tube (Sa) is performed to a pressure (pa2) which is greater than a pressure value PA1, which acts on the inner side of the outer tube (Sa) as constant pressure value or as mean pressure value during the corrugation shaping of the outer tube (Sa), which immediately precedes the sleeve shaping of the outer tube (Sa).

13. Method according to any one of claims 2 to 12,
**characterised in that**
the reduction, provided in step a3, of the pressure (pa) acting on the inner side of the outer tube is performed before the inner tube is extruded into the outer tube already in contact with the sleeve moulding surface, but while the outer tube (Sa) is being extruded into one or more corrugation moulding surface(s) adjoining the sleeve moulding surface against the production direction X.

14. Method according to any one of the preceding claims,
**characterised in that**
while in step a4 the inner tube (Si) is being extruded into the outer tube (Sa) already in contact with the sleeve moulding surface, the outer tube is extruded into one or more corrugation moulding surface(s) adjoining the sleeve moulding surface against the production direction with atmospheric pressure or an overpressure close to atmospheric pressure acting on the inner side of the outer tube (Sa), wherein the outer tube (Sa) is contacted with the corrugated moulding surface under the action of vacuum or partial vacuum, which acts on the outer side of the outer tube (Sa) in the region of the corrugation moulding surface.

15. Method according to any one of the preceding claims,
**characterised in that**
over the entire time of the extrusion, performed in step a2, of the outer tube (Sa) into the sleeve moulding surface, the pressure (pa) acting on the inner side of the outer tube (Sa) is held above atmospheric pressure.

16. Method according to any one of the preceding claims,
**characterised in that**
over the entire time of the extrusion, performed in step b2, of the inner tube (Si) into the outer tube (Sa) already in contact with the sleeve moulding surface, the pressure (pa) acting on the inner side of the outer tube (Sa)
is either held at atmospheric pressure or
is set to a controlled pressure (pa2), which lies above atmospheric pressure, but is reduced towards the end of the sleeve shaping to atmospheric pressure.

17. Method according to any one of the preceding claims,
**characterised in that**
the increase of the pressure acting on the inner side of the inner tube (Si) to a pressure (pi2) above atmospheric pressure in step b1 is designed as a slow pressure increase.

18. Method according to any one of claims 1 or 3 to 17,
**characterised in that**
the pressure (pi) above atmospheric pressure acting on the inner side of the inner tube (Si) in step b2 is significantly increased again towards the end of the sleeve shaping of the inner tube.

19. Device for producing a continuous double-walled pipe, which is made of preferably thermoplastic plastic material and has corrugated pipe segments and sleeve pipe segments for carrying out the method according to any one of the preceding claims,
with a moulding channel (10), which is formed from moulding surfaces of peripheral moulding jaw pairs (1n, 1m), wherein at least a portion of the moulding channel (10) has a corrugated moulding surface and at least a further portion of the moulding channel (10) has a preferably smooth, cylindrical or slightly conical sleeve moulding surface,
with an extrusion unit with extrusion head (5), which has a first nozzle (5a) for extruding the outer tube (Sa) and a second nozzle (5i) for extruding the inner tube (Si), wherein the second nozzle (5i) is arranged downstream of the first nozzle (5a) in the movement direction (X) of the moulding jaws (1n, 1m) guided in the moulding channel (10),
with a first air channel (5ak) leading between the first nozzle (5a) and the second nozzle (5i) into the moulding channel (10) for feeding supporting air which cooperates with the inner side of the outer tube (Sa), and with a second air channel (5ik) arranged downstream of the second nozzle (5i) in the movement direction (X) of the moulding jaws (1n, 1m) guided in the moulding channel (10) and likewise leading into the moulding channel (10) for feeding supporting air which cooperates with the inner side of the inner tube (Si),
wherein it is provided that
the axial distance between the first nozzle (5a) and the second nozzle (5i) is greater than or equal to the axial longitudinal extent of the portion (1m) of the moulding channel (10) having the sleeve moulding surface,
wherein
(v1) the supporting air cooperating with the inner side of the outer tube (Sa) is connected to a first pressure controller connected to the first air channel (5ak) and
the supporting air cooperating with the inner side of the inner tube (Si) is connected to a second pressure controller connected to the second air channel (5ik),
(v2) the first and the second pressure controller are connected to a preferably electronic control device for controlling the pressure controllers, wherein the control device has a control program which represents part of the control device in that the control device is programmed with the control program and the control device is designed with the control program in conjunction with the pressure controllers in such a way and is configured with the control program in such a way
that the inner side of the outer tube is acted on by a pressure (pa) controlled by open-loop and/or closed-loop control according to steps a1, a2, a3 and a4, and the inner side of the inner tube is acted on by pressure (pi) controlled by open-loop and/or closed-loop control according to steps b1, b2 and b3, wherein steps a1 to a4 are defined as follows:
step a1: just before or at the start of the extrusion of the outer tube (Sa) into the sleeve moulding surface, the pressure (pa) acting on the inner side of the outer tube (Sa) is reduced (pa2),
step a2: during the extrusion of the outer tube (Sa) into the sleeve moulding surface, the pressure (pa) acting on the inner side of the outer tube (Sa) is varied or consistently controlled in such a way that it is above atmospheric pressure at least for the majority of the duration of the extrusion of the outer tube (Sa) into the sleeve moulding surface,
wherein it is provided
that the pressure (pa) acting in step a2 on the inner side of the outer tube (Sa) is increased temporarily before or during or temporarily after the extrusion of the outer tube (Sa) into the rear flank of the sleeve moulding surface, and
that after completion of the extrusion, performed in step a2, of the outer tube (Sa) into the sleeve moulding surface, but before the inner tube (Si) is extruded into the outer tube (Sa) already in contact with the sleeve moulding surface, the outer tube (Sa) is extruded into one or more corrugated moulding surface(s) adjoining the sleeve moulding surface against the production direction X and in so doing the pressure (pa) acting on the inner side of the outer tube (Sa) is increased at least temporarily,
step a3: once the extrusion of the outer tube (Sa) into the sleeve moulding surface is complete, more specifically before or at the start of the extrusion of the inner tube (Si) into the outer tube (Sa) already in contact with the sleeve moulding surface, the pressure (pa) acting on the inner side of the outer tube (Sa) is reduced to atmospheric pressure or to a pressure that lies in a range slightly above atmospheric pressure, and
step a4: during the extrusion of the inner tube (Si) into the outer tube (Sa) already in contact with the sleeve moulding surface, the pressure (pa) acting on the inner side of the outer tube (Sa) is held, at least over the majority of the period of the extrusion of the inner tube (Si) into the outer tube (Sa) already in contact with the sleeve moulding surface, at atmospheric pressure or at a constant or variable pressure lying in a range slightly above atmospheric pressure,
wherein steps b1 to 3 are defined as follows:
step b1: just before or at the start of the extrusion of the inner tube (Si) into the outer tube (Sa) already in contact with the sleeve moulding surface, the pressure (pi) acting on the inner side of the inner tube (Si) is increased to a pressure (pi2) above atmospheric pressure, and
step b2: during the extrusion of the inner tube (Si) into the outer tube (Sa) already in contact with the sleeve moulding surface, the pressure (pi) acting on the inner side of the inner tube (Si) is held above atmospheric pressure, and
step b3: once the extrusion of the inner tube (Si) into the outer tube (Sa) already in contact with the sleeve moulding surface is complete, or just before, the pressure (pi) acting on the inner side of the inner tube (Si) is reduced to atmospheric pressure or a pressure above atmospheric pressure.

20. Device for producing a continuous double-walled pipe, which is made of preferably thermoplastic plastic material and has corrugated pipe segments and sleeve pipe segments for carrying out the method according to any one of claims 1 to 18,
with a moulding channel (10), which is formed from moulding surfaces of peripheral moulding jaw pairs (1n, 1m), wherein at least a portion of the moulding channel (10) has a corrugated moulding surface and at least a further portion of the moulding channel (10) has a preferably smooth, cylindrical or slightly conical sleeve moulding surface,
with an extrusion unit with extrusion head (5), which has a first nozzle (5a) for extruding the outer tube (Sa) and a second nozzle (5i) for extruding the inner tube (Si), wherein the second nozzle (5i) is arranged downstream of the first nozzle (5a) in the movement direction (X) of the moulding jaws (1n, 1m) guided in the moulding channel (10),
with a first air channel (5ak) leading between the first nozzle (5a) and the second nozzle (5i) into the moulding channel (10) for feeding supporting air which cooperates with the inner side of the outer tube (Sa), and with a second air channel (5ik) arranged downstream of the second nozzle (5i) in the movement direction (X) of the moulding jaws (1n, 1m) guided in the moulding channel (10) and likewise leading into the moulding channel (10) for feeding supporting air which cooperates with the inner side of the inner tube (Si),
wherein it is provided that
the axial distance between the first nozzle (5a) and the second nozzle (5i) is greater than or equal to the axial longitudinal extent of the portion (1m) of the moulding channel (10) having the sleeve moulding surface,
wherein
(v1) the supporting air cooperating with the inner side of the outer tube (Sa) is connected to a first pressure controller connected to the first air channel (5ak) and the supporting air cooperating with the inner side of the inner tube (Si) is connected to a second pressure controller connected to the second air channel (5ik),
(v2) the first and the second pressure controller are connected to a preferably electronic control device for controlling the pressure controller, wherein the control device has a control program which represents part of the control device in that the control device is programmed with the control program and the control device is designed with the control program in conjunction with the pressure controllers in such a way and is configured with the control program in such a way that the inner side of the outer tube is acted on by a pressure (pa) controlled by open-loop and/or closed-loop control according to steps a1, a2, a3 and a4, and the inner side of the inner tube is acted on by a pressure (pi) controlled by open-loop and/or closed-loop control according to steps b1, b2 and b3, wherein steps a1 to a4 are defined as follows:
step a1: just before or at the start of the extrusion of the outer tube (Sa) into the sleeve moulding surface, the pressure (pa) acting on the inner side of the outer tube (Sa) is reduced (pa2),
step a2: during the extrusion of the outer tube (Sa) into the sleeve moulding surface, the pressure (pa) acting on the inner side of the outer tube (Sa) is varied or consistently controlled in such a way that it is above atmospheric pressure at least for the majority of the duration of the extrusion of the outer tube (Sa) into the sleeve moulding surface,
step a3: once the extrusion of the outer tube (Sa) into the sleeve moulding surface is complete, more specifically before or at the start of the extrusion of the inner tube (Si) into the outer tube (Sa) already in contact with the sleeve moulding surface, the pressure (pa) acting on the inner side of the outer tube (Sa) is reduced to atmospheric pressure or to a pressure that lies in a range slightly above atmospheric pressure, and
step a4: during the extrusion of the inner tube (Si) into the outer tube (Sa) already in contact with the sleeve moulding surface, the pressure (pa) acting on the inner side of the outer tube (Sa) is held, at least over the majority of the period of the extrusion of the inner tube (Si) into the outer tube (Sa) already in contact with the sleeve moulding surface, at atmospheric pressure or at a constant or variable pressure lying in a range slightly above atmospheric pressure,
wherein steps b1 to 3 are defined as follows:
step b1: just before or at the start of the extrusion of the inner tube (Si) into the outer tube (Sa) already in contact with the sleeve moulding surface, the pressure (pi) acting on the inner side of the inner tube (Si) is increased to a pressure (pi2) above atmospheric pressure, and
step b2: during the extrusion of the inner tube (Si) into the outer tube (Sa) already in contact with the sleeve moulding surface, the pressure (pi) acting on the inner side of the inner tube (Si) is held above atmospheric pressure, and
wherein it is provided that
the pressure (pi) above atmospheric pressure acting on the inner side of the inner tube (Si) in step b2 is again increased significantly towards the end of the sleeve shaping of the inner tube,
step b3: once the extrusion of the inner tube (Si) into the outer tube (Sa) already in contact with the sleeve moulding surface is complete, or just before, the pressure (pi) acting on the inner side of the inner tube (Si) is reduced to atmospheric pressure or a pressure above atmospheric pressure.

21. Device according to claim 19 or 20,
**characterised in that**
at least one of the pressure controllers, preferably the first and the second pressure controller, has an electronically controlled pressure control valve, preferably a proportional valve, via which a pressure above atmospheric pressure and/or a pressure above atmospheric pressure including atmospheric pressure can be controlled consistently and/or variably in the associated space.

22. Device according to any one of claims 19 to 21,
**characterised in that**
the pressure controller has a switchover valve which in the open position connects the space associated with the pressure controller to atmosphere.

23. Device according to claim 22,
**characterised in that**
the switchover valve and the electronically controlled pressure control valve, preferably proportional valve, is connected to the associated space such that, when the switchover valve is open, atmospheric pressure is set in the associated space independently of the position of the proportional valve.

## Revendications

1. Procédé de fabrication d'un tube sans fin à double paroi constitué de préférence d'une matière plastique thermoplastique, avec des portions tubulaires ondulées et des portions tubulaires à manchons,
par extrusion d'une gaine externe (Sa) constituant le tube externe du tube à double paroi et d'une gaine interne (Si) constituant le tube interne du tube à double paroi dans un canal de moulage (10) avec au moins une portion avec une surface de moulage ondulée et au moins une portion avec une surface de moulage de manchon, de préférence lisse, cylindrique ou légèrement conique ;
dans lequel il est prévu
- que, pour la déformation d'une portion tubulaire ondulée, la gaine externe (Sa) est extrudée dans la surface de moulage ondulée et est amenée en appui contre la surface de moulage ondulée et la gaine interne (Si) est extrudée dans la gaine externe (Sa) et est amenée en appui contre la gaine externe (Sa) appuyée contre la surface de moulage ondulée au niveau des creux des ondulations de la gaine externe (Sa) ;
- que, pour la déformation d'une portion de manchon, la gaine externe (Sa) est d'abord extrudée dans la surface de moulage de manchon et est amenée en appui contre la surface de moulage de manchon sur toute la longueur axiale de la surface de moulage de manchon et la gaine interne (Si) est alors extrudée dans la gaine externe (Sa) déjà appuyée sur toute la longueur axiale de la surface de moulage de manchon puis amenée en appui contre le côté interne de la gaine externe (Sa) déjà en appui sur toute la longueur axiale de la surface de moulage de manchon,
dans lequel
a) la pression (pa) agissant sur le côté interne de la gaine externe (Sa) est contrôlée et/ou régulée comme suit :
Étape a1 : brièvement avant ou au début de l'extrusion de la gaine externe (Sa) dans la surface de moulage de manchon, la pression (pa) agissant sur le côté interne de la gaine externe (Sa) est réduite (pa2),
Étape a2 : pendant l'extrusion de la gaine externe (Sa) dans la surface de moulage de manchon, la pression (pa) agissant sur le côté interne de la gaine externe (Sa) est contrôlée de manière variable ou constante de façon à ce qu'elle se trouve au-dessus de la pression atmosphérique au moins sur la majeure partie de la durée de l'extrusion de la gaine externe (Sa) dans la surface de moulage de manchon,
dans lequel, il est prévu
que la pression (pa) agissant, à l'étape a2, sur le côté interne de la gaine externe (Sa) soit augmentée brièvement avant ou pendant ou brièvement après l'extrusion de la gaine externe (Sa) dans le flanc arrière de la surface de moulage de manchon et
que, après la fin de l'extrusion, réalisée à l'étape a2, de la gaine externe (Sa) dans la surface de moulage de manchon, mais avant que la gaine interne (Si) soit extrudée dans la gaine externe (Sa) déjà appuyée contre la surface de moulage de manchon, la gaine externe (Sa) soit extrudée dans une ou plusieurs surfaces de moulage ondulées se succédant à la surface de moulage de manchon contre la direction de production X et la pression (pa) agissant sur le côté interne de la gaine externe (Sa) est augmentée au moins brièvement,
Étape a3 : après la fin de l'extrusion de la gaine externe (Sa) dans la surface de moulage de manchon, à savoir avant ou au début de l'extrusion de la gaine interne (Si) dans la gaine externe (Sa) déjà appuyée contre la surface de moulage de manchon, la pression (pa) agissant sur le côté interne de la gaine externe (Sa) est réduite à la pression atmosphérique ou à une pression qui se trouve dans une plage légèrement au-dessus de la pression atmosphérique et
dans lequel il est prévu
que la réduction, prévue à l'étape a3, de la pression (pa) agissant sur le côté interne de la gaine externe a lieu avant que la gaine interne soit extrudée dans la gaine externe déjà appuyée contre la surface de moulage de manchon mais pendant que la gaine externe (Sa) est extrudée dans une ou plusieurs surfaces de moulage ondulées succédant à la surface de moulage de manchon contre la direction de production X,
Étape a4 : pendant l'extrusion de la gaine interne (Si) dans la gaine externe (Sa) déjà appuyée contre la surface de moulage de manchon, la pression (pa) agissant sur le côté interne de la gaine externe (Sa) est maintenue à la pression atmosphérique ou à une pression constante ou variable qui se trouve dans une plage légèrement au-dessus de la pression atmosphérique au moins sur la majeure partie de la durée de l'extrusion de la gaine interne (Si) dans la gaine externe (Sa) déjà appuyée contre la surface de moulage de manchon et
b) la pression (pi) agissant sur le côté interne de la gaine interne (Si) est contrôlée et/ou régulée comme suit :
Étape b1 : brièvement avant ou au début de l'extrusion de la gaine interne (Si) dans la gaine externe (Sa) déjà appuyée contre la surface de moulage de manchon, la pression (pi) agissant sur le côté interne de la gaine interne (Si) est augmentée à une pression (pi2) au-dessus de la pression atmosphérique et
Étape b2 : pendant l'extrusion de la gaine interne (Si) dans la gaine externe (Sa) déjà appuyée contre la surface de moulage de manchon, la pression (pi) agissant sur le côté interne de la gaine interne (Si) est maintenue à une pression au-dessus de la pression atmosphérique et
Étape b3 : après la fin de l'extrusion de la gaine interne (Si) dans la gaine externe (Sa) déjà appuyée contre la surface de moulage de manchon ou brièvement avant, la pression (pi) agissant sur le côté interne de la gaine interne (Si) est réduite à la pression atmosphérique ou à une pression au-dessus de la pression atmosphérique.

2. Procédé de fabrication d'un tube sans fin à double paroi constitué de préférence d'une matière plastique thermoplastique, avec des portions tubulaires ondulées et des portions tubulaires à manchons,
par extrusion d'une gaine externe (Sa) constituant le tube externe du tube à double paroi et d'une gaine interne (Si) constituant le tube interne du tube à double paroi dans un canal de moulage (10) avec au moins une portion avec une surface de moulage ondulée et au moins une portion avec une surface de moulage de manchon, de préférence lisse, cylindrique ou légèrement conique ;
dans lequel, il est prévu
- que, pour la déformation d'une portion tubulaire ondulée, la gaine externe (Sa) est extrudée dans la surface de moulage ondulée et est amenée en appui contre la surface de moulage ondulée et la gaine interne (Si) est extrudée dans la gaine externe (Sa) et est amenée en appui contre la gaine externe (Sa) appuyée contre la surface de moulage ondulée au niveau des creux des ondulations de la gaine externe (Sa) ;
- que, pour la déformation d'une portion de manchon, la gaine externe (Sa) est d'abord extrudée dans la surface de moulage de manchon et est amenée en appui contre la surface de moulage de manchon sur toute la longueur axiale de la surface de moulage de manchon et la gaine interne (Si) est alors extrudée dans la gaine externe (Sa) déjà appuyée sur toute la longueur axiale de la surface de moulage de manchon puis amenée en appui contre le côté interne de la gaine externe (Sa) déjà en appui sur toute la longueur axiale de la surface de moulage de manchon,
dans lequel
a) la pression (pa) agissant sur le côté interne de la gaine externe (Sa) étant contrôlée et/ou régulée comme suit :
Étape a1 : brièvement avant ou au début de l'extrusion de la gaine externe (Sa) dans la surface de moulage de manchon, la pression (pa) agissant sur le côté interne de la gaine externe (Sa) est réduite (pa2),
Étape a2 : pendant l'extrusion de la gaine externe (Sa) dans la surface de moulage de manchon, la pression (pa) agissant sur le côté interne de la gaine externe (Sa) est contrôlée de manière variable ou constante de façon à ce qu'elle se trouve au-dessus de la pression atmosphérique au moins sur la majeure partie de la durée de l'extrusion de la gaine externe (Sa) dans la surface de moulage de manchon,
Étape a3 : après la fin de l'extrusion de la gaine externe (Sa) dans la surface de moulage de manchon, à savoir avant ou au début de l'extrusion de la gaine interne (Si) dans la gaine externe (Sa) déjà appuyée contre la surface de moulage de manchon, la pression (pa) agissant sur le côté interne de la gaine externe (Sa) est réduite à la pression atmosphérique ou à une pression qui se trouve dans une plage légèrement au-dessus de la pression atmosphérique et
Étape a4 : pendant l'extrusion de la gaine interne (Si) dans la gaine externe (Sa) déjà appuyée contre la surface de moulage de manchon, la pression (pa) agissant sur le côté interne de la gaine externe (Sa) est maintenue à la pression atmosphérique ou à une pression constante ou variable qui se trouve dans une plage légèrement au-dessus de la pression atmosphérique au moins sur la majeure partie de la durée de l'extrusion de la gaine interne (Si) dans la gaine externe (Sa) déjà appuyée contre la surface de moulage de manchon et
b) la pression (pi) agissant sur le côté interne de la gaine interne (Si) est contrôlée et/ou régulée comme suit :
Étape b1 : brièvement avant ou au début de l'extrusion de la gaine interne (Si) dans la gaine externe (Sa) déjà appuyée contre la surface de moulage de manchon, la pression (pi) agissant sur le côté interne de la gaine interne (Si) est augmentée à une pression (pi2) au-dessus de la pression atmosphérique et
Étape b2 : pendant l'extrusion de la gaine interne (Si) dans la gaine externe (Sa) déjà appuyée contre la surface de moulage de manchon, la pression (pi) agissant sur le côté interne de la gaine interne (Si) est maintenue à une pression au-dessus de la pression atmosphérique et
Étape b3 : après la fin de l'extrusion de la gaine interne (Si) dans la gaine externe (Sa) déjà appuyée contre la surface de moulage de manchon ou brièvement avant, la pression (pi) agissant sur le côté interne de la gaine interne (Si) est réduite à la pression atmosphérique ou à une pression au-dessus de la pression atmosphérique.

3. Procédé selon la revendication 1 ou 2,
**caractérisé en ce que**
la pression (pa) agissant, à l'étape a2, sur le côté interne de la gaine externe (Sa), pendant que la gaine externe (Sa) est extrudée dans la portion de longueur cylindrique ou conique de la surface de moulage de manchon, est inférieure à une pression (pa1) qui agit sur le côté interne de la gaine externe (Sa) en tant que valeur de pression constante PA1 ou en tant que valeur de pression moyenne pendant la formation des ondulations de la gaine externe (Sa) qui précède la formation du manchon de la gaine externe.

4. Procédé selon l'une des revendications 1 à 3,
**caractérisé en ce que**
la pression (pa) agissant, à l'étape a2, sur le côté interne de la gaine externe (Sa), pendant que la gaine externe (Sa) est extrudée dans la portion de longueur cylindrique ou conique de la surface de moulage de manchon, alterne entre une valeur de pression supérieure et une valeur de pression inférieure.

5. Procédé selon la revendication 4,
**caractérisé en ce que**
la valeur de pression supérieure est inférieure ou égale à une valeur de pression PA1, qui agit sur le côté interne de la gaine externe (Sa) en tant que valeur de pression constante ou en tant que valeur de pression moyenne pendant la formation des ondulations de la gaine externe (Sa) qui précède immédiatement la formation du manchon de la gaine externe (Sa).

6. Procédé selon la revendication 4 ou 5,
**caractérisé en ce que**
la valeur de pression inférieure est supérieure ou égale à la pression atmosphérique.

7. Procédé selon l'une des revendications précédentes,
**caractérisé en ce que**
la pression (pa) agissant, à l'étape a2, sur le côté interne de la gaine externe (Sa) est augmentée après l'extrusion de la gaine externe (Sa) dans le flanc avant de la zone de transition de la surface de moulage de manchon et/ou brièvement avant ou pendant l'extrusion de la gaine externe (Sa) dans la partie à rayon arrondi précédant la portion de longueur cylindrique de la surface de moulage de manchon.

8. Procédé selon la revendication 7,
**caractérisé en ce que**
l'augmentation, prévue selon la revendication 7, de la pression (pa) agissant sur le côté interne de la gaine externe (Sa) est effectuée jusqu'à une pression (pa2) qui est supérieure ou égale à une valeur de pression PA1, qui agit sur le côté interne de la gaine externe (Sa) en tant que valeur de pression constante ou en tant que valeur de pression moyenne, pendant la formation des ondulations de la gaine externe (Sa) qui précède la formation du manchon.

9. Procédé selon l'une des revendications 2 à 8,
**caractérisé en ce que**
la pression (pa) agissant, à l'étape a2, sur le côté interne de la gaine externe (Sa) est augmentée brièvement avant ou pendant ou brièvement après l'extrusion de la gaine externe (Sa) dans le flanc arrière de la surface de moulage de manchon.

10. Procédé selon la revendication 9,
**caractérisé en ce que**
l'augmentation, prévue selon la revendication 9, de la pression (pa) agissant sur le côté interne de la gaine externe (Sa) est effectuée jusqu'à une pression (pa2) qui est supérieure ou égale à une valeur de pression PA1, qui agit sur le côté interne de la gaine externe en tant que valeur de pression constante ou en tant que valeur de pression moyenne pendant la formation des ondulations de la gaine externe (Sa), qui précède la formation du manchon de la gaine externe (Sa).

11. Procédé selon l'une des revendications 2 à 10,
**caractérisé en ce que**
après la fin de l'extrusion, effectuée à l'étape a2, de la gaine externe (Sa) dans la surface de moulage de manchon, mais avant que la gaine interne (Si) soit extrudée dans la gaine externe (Sa) déjà appuyée contre la surface de moulage de manchon, la gaine externe (Sa) est extrudée dans une ou plusieurs surfaces de moulage ondulées succédant à la surface de moulage de manchon contre la direction de production X et la pression (pa) agissant sur le côté interne de la gaine externe (Sa) est au moins brièvement augmentée.

12. Procédé selon la revendication 11,
**caractérisé en ce que**
l'augmentation, prévue selon la revendication 11, de la pression agissant sur le côté interne de la gaine externe (Sa) est effectuée jusqu'à une pression (pa2) qui se trouve au-dessus d'une valeur de pression PA1, qui agit sur le côté interne de la gaine externe (Sa) en tant que valeur de pression constante ou en tant que valeur de pression moyenne pendant la formation des ondulations de la gaine externe (Sa), qui précède immédiatement la formation du manchon de la gaine externe (Sa).

13. Procédé selon l'une des revendications 2 à 12,
**caractérisé en ce que**
la réduction, prévue à l'étape a3, de la pression (pa) agissant sur le côté interne de la gaine externe, avant que la gaine interne soit extrudée dans la gaine externe déjà appuyée contre la surface de moulage du manchon, mais pendant que la gaine externe (Sa) soit extrudée dans une ou plusieurs surfaces de moulage ondulées succédant à la surface de moulage de manchon contre la direction de production X.

14. Procédé selon l'une des revendications précédentes,
**caractérisé en ce que**
pendant que, à l'étape a4, la gaine interne (Si) est extrudée dans la gaine externe (Sa) déjà appuyée contre la surface de moulage de manchon, la gaine externe est extrudée dans une ou plusieurs surfaces de moulage ondulées succédant la surface de moulage de manchon contre la direction de production, avec une pression atmosphérique ou une surpression proche de la pression atmosphérique agissant sur le côté interne de la gaine externe (Sa), l'appui de la gaine externe (Sa) contre la surface de moulage ondulée ayant lieu sous l'effet du vide ou d'un vide partiel, qui agit au niveau de la surface de moulage ondulée sur le côté externe de la gaine externe (Sa).

15. Procédé selon l'une des revendications précédentes,
**caractérisé en ce que**
tout le temps de l'extrusion, effectuée à l'étape a2, de la gaine externe (Sa) dans la surface de moulage de manchon, la pression (pa) agissant sur le côté interne de la gaine externe (Sa) est maintenue au-dessus de la pression atmosphérique.

16. Procédé selon l'une des revendications précédentes,
**caractérisé en ce que**
tout le temps de l'extrusion, effectuée à l'étape b2, de la gaine interne (Si) dans la gaine externe (Sa) déjà appuyée contre la surface de moulage de manchon, la pression (pa) agissant sur le côté interne de la gaine externe (Sa) est
soit maintenue à la pression atmosphérique
soit réglée à une pression régulée (pa2) qui se trouve au-dessus de la pression atmosphérique mais qui est réduite à la pression atmosphérique à la fin de la formation du manchon.

17. Procédé selon l'une des revendications précédentes,
**caractérisé en ce que**
l'augmentation de la pression agissant sur le côté interne de la gaine interne (Si) à une pression (pi2) au-dessus de la pression atmosphérique à l'étape b1 est conçue comme une augmentation lente de la pression.

18. Procédé selon l'une des revendications 1 ou 3 à 17,
**caractérisé en ce que**
la pression au-dessus de la pression atmosphérique (pi) agissant sur le côté interne de la gaine interne (Si) à l'étape b2 est encore une fois considérablement augmentée à la fin de la formation du manchon de la gaine interne.

19. Dispositif de fabrication d'un tube sans fin à double paroi constitué de préférence d'une matière plastique thermoplastique avec des portions tubulaires ondulées et des portions tubulaires à manchons pour l'exécution du procédé selon l'une des revendications précédentes,
avec un canal de moulage (10), qui est constitué de surfaces de moulage de paires de mâchoires de moulage (1n, 1m), au moins une portion du canal de moulage (10) présentant une surface de moulage ondulée et au moins une autre portion du canal de moulage (10) présentant une surface de moulage de manchon, de préférence cylindrique lisse ou légèrement conique,
avec un dispositif d'extrusion (10) avec une tête d'injection (5), qui comprend une première buse (5a) pour l'extrusion de la gaine externe (Sa) et une deuxième buse (5i) pour l'extrusion de la gaine interne (Si), la deuxième buse (5i) étant disposée après la première buse (5a) dans la direction de déplacement (X) des mâchoires de moulage (1n, 1m) guidées dans le canal de moulage (10),
avec un premier canal d'air (5ak) débouchant dans le canal de moulage (10) entre la première buse (5a) et la deuxième buse (5i), pour l'introduction d'un air de soutien, qui interagit avec le côté interne de la gaine externe (Sa) et un deuxième canal d'air (5ik), disposé après la deuxième buse (5i) dans la direction de déplacement (X) des mâchoires de moulage (1n, 1m) guidées dans le canal de moulage (10), débouchant également dans le canal de moulage (10), pour l'introduction d'un air de soutien, qui interagit avec le côté interne de la gaine interne (Si),
dans lequel il est prévu
que la distance axiale entre la première buse (5a) et la deuxième buse (5i) est supérieure ou égale à l'extension de longueur axiale de la portion (1m) du canal de moulage (10) comprenant la surface de moulage de manchon,
dans lequel
(V1) l'air de soutien interagissant avec le côté interne de la gaine externe (Sa) étant relié avec un premier régulateur de pression relié avec le premier canal d'air (5ak) et l'air de soutien interagissant avec le côté interne de la gaine interne (Si) étant relié avec un deuxième régulateur de pression relié avec le deuxième canal d'air (5ik)
(V2) les premier et deuxième régulateurs de pression sont reliés avec un dispositif de commande, de préférence électronique, pour le contrôle des régulateurs de pression, le dispositif de commande comprenant un programme de commande qui constitue une partie du dispositif de commande, le dispositif de commande étant programmé avec le programme de commande et le dispositif de commande avec le programme de commande est conçu en lien avec les régulateurs de pression et avec le programme de commande
de façon à ce que le côté interne de la gaine externe soit sollicitée avec une pression (pa) contrôlée et/ou régulée selon les étapes a1, a2, a3 et a4, et à ce que le côté interne de la gaine interne soit sollicité avec une pression (pi) contrôlée et/ou régulée selon les étapes b1, b2 et b3, les étapes a1 à a4 étant définies comme suit :
Étape a1 : brièvement avant ou au début de l'extrusion de la gaine externe (Sa) dans la surface de moulage de manchon, la pression (pa) agissant sur le côté interne de la gaine externe (Sa) est réduite (pa2),
Étape a2 : pendant l'extrusion de la gaine externe (Sa) dans la surface de moulage de manchon, la pression (pa) agissant sur le côté interne de la gaine externe (Sa) est contrôlée de manière variable ou constante de façon à ce qu'elle se trouve au-dessus de la pression atmosphérique au moins sur la majeure partie de la durée de l'extrusion de la gaine externe (Sa) dans la surface de moulage de manchon,
dans lequel, il est prévu
que la pression (pa) agissant, à l'étape a2, sur le côté interne de la gaine externe (Sa) soit augmentée brièvement avant ou pendant ou brièvement après l'extrusion de la gaine externe (Sa) dans le flanc arrière de la surface de moulage de manchon et
que, après la fin de l'extrusion, réalisée à l'étape a2, de la gaine externe (Sa) dans la surface de moulage de manchon, mais avant que la gaine interne (Si) soit extrudée dans la gaine externe (Sa) déjà appuyée contre la surface de moulage de manchon, la gaine externe (Sa) soit extrudée dans une ou plusieurs surfaces de moulage ondulées succédant à la surface de moulage de manchon contre la direction de production X et la pression (pa) agissant sur le côté interne de la gaine externe (Sa) est augmentée au moins brièvement,
Étape a3 : après la fin de l'extrusion de la gaine externe (Sa) dans la surface de moulage de manchon, à savoir avant ou au début de l'extrusion de la gaine interne (Si) dans la gaine externe (Sa) déjà appuyée contre la surface de moulage de manchon, la pression (pa) agissant sur le côté interne de la gaine externe (Sa) est réduite à la pression atmosphérique ou à une pression qui se trouve dans une plage légèrement au-dessus de la pression atmosphérique et
Étape a4 : pendant l'extrusion de la gaine interne (Si) dans la gaine externe (Sa) déjà appuyée contre la surface de moulage de manchon, la pression (pa) agissant sur le côté interne de la gaine externe (Sa) est maintenue à la pression atmosphérique ou à une pression constante ou variable qui se trouve dans une plage légèrement au-dessus de la pression atmosphérique au moins sur la majeure partie de la durée de l'extrusion de la gaine interne (Si) dans la gaine externe (Sa) déjà appuyée contre la surface de moulage de manchon,
les étapes b1 à 3 étant définies comme suit :
Étape b1 : brièvement avant ou au début de l'extrusion de la gaine interne (Si) dans la gaine externe (Sa) déjà appuyée contre la surface de moulage de manchon, la pression (pi) agissant sur le côté interne de la gaine interne (Si) est augmentée à une pression (pi2) au-dessus de la pression atmosphérique et
Étape b2 : pendant l'extrusion de la gaine interne (Si) dans la gaine externe (Sa) déjà appuyée contre la surface de moulage de manchon, la pression (pi) agissant sur le côté interne de la gaine interne (Si) est maintenue à une pression au-dessus de la pression atmosphérique et
Étape b3 : après la fin de l'extrusion de la gaine interne (Si) dans la gaine externe (Sa) déjà appuyée contre la surface de moulage de manchon ou brièvement avant, la pression (pi) agissant sur le côté interne de la gaine interne (Si) est réduite à la pression atmosphérique ou à une pression au-dessus de la pression atmosphérique.

20. Dispositif de fabrication d'un tube sans fin à double paroi constitué de préférence d'une matière plastique thermoplastique avec des portions tubulaires ondulées et des portions tubulaires à manchons pour l'exécution du procédé selon l'une des revendications là 18,
avec un canal de moulage (10), qui est constitué de surfaces de moulage de paires de mâchoires de moulage (1n, 1m), au moins une portion du canal de moulage (10) présentant une surface de moulage ondulée et au moins une autre portion du canal de moulage (10) présentant une surface de moulage de manchon, de préférence cylindrique lisse ou légèrement conique,
avec un dispositif d'extrusion avec une tête d'injection (5), qui comprend une première buse (5a) pour l'extrusion de la gaine externe (Sa) et une deuxième buse (5i) pour l'extrusion de la gaine interne (Si), la deuxième buse (5i) étant disposée après la première buse (5a) dans la direction de déplacement (X) des mâchoires de moulage (1n, 1m) guidées dans le canal de moulage (10),
avec un premier canal d'air (5ak) débouchant dans le canal de moulage (10) entre la première buse (5a) et la deuxième buse (5i), pour l'introduction d'un air de soutien, qui interagit avec le côté interne de la gaine externe (Sa) et un deuxième canal d'air (5ik), disposé après la deuxième buse (5i) dans la direction de déplacement (X) des mâchoires de moulage (1n, 1m) guidées dans le canal de moulage (10), débouchant également dans le canal de moulage (10), pour l'introduction d'un air de soutien, qui interagit avec le côté interne de la gaine interne (Si),
dans lequel il est prévu
que la distance axiale entre la première buse (5a) et la deuxième buse (5i) est supérieure ou égale à l'extension de longueur axiale de la portion (1m) du canal de moulage (10) comprenant la surface de moulage de manchon,
dans lequel
(V1) l'air de soutien interagissant avec le côté interne de la gaine externe (Sa) étant relié avec un premier régulateur de pression relié avec le premier canal d'air (5ak) et l'air de soutien interagissant avec le côté interne de la gaine interne (Si) étant relié avec un deuxième régulateur de pression relié avec le deuxième canal d'air (5ik)
(V2) les premier et deuxième régulateurs de pression sont reliés avec un dispositif de commande, de préférence électronique, pour le contrôle des régulateurs de pression, le dispositif de commande comprenant un programme de commande qui constitue une partie du dispositif de commande, le dispositif de commande étant programmé avec le programme de commande et le dispositif de commande avec le programme de commande est conçu en lien avec les régulateurs de pression et avec le programme de commande
de façon à ce que le côté interne de la gaine externe soit sollicité avec une pression contrôlée et/ou régulée (pa) selon les étapes a1, a2, a3 et a4, et à ce que le côté interne de la gaine interne est sollicité avec une pression (pi) contrôlée et/ou régulée selon les étapes b1, b2 et b3, les étapes a1 à a4 étant définies comme suit :
Étape a1 : brièvement avant ou au début de l'extrusion de la gaine externe (Sa) dans la surface de moulage de manchon, la pression (pa) agissant sur le côté interne de la gaine externe (Sa) est réduite (pa2),
Étape a2 : pendant l'extrusion de la gaine externe (Sa) dans la surface de moulage de manchon, la pression (pa) agissant sur le côté interne de la gaine externe (Sa) est contrôlée de manière variable ou constante de façon à ce qu'elle se trouve au-dessus de la pression atmosphérique au moins sur la majeure partie de la durée de l'extrusion de la gaine externe (Sa) dans la surface de moulage de manchon,
Étape a3 : après la fin de l'extrusion de la gaine externe (Sa) dans la surface de moulage de manchon, à savoir avant ou au début de l'extrusion de la gaine interne (Si) dans la gaine externe (Sa) déjà appuyée contre la surface de moulage de manchon, la pression (pa) agissant sur le côté interne de la gaine externe (Sa) est réduite à la pression atmosphérique ou à une pression qui se trouve dans une plage légèrement au-dessus de la pression atmosphérique et
Étape a4 : pendant l'extrusion de la gaine interne (Si) dans la gaine externe (Sa) déjà appuyée contre la surface de moulage de manchon, la pression (pa) agissant sur le côté interne de la gaine externe (Sa) est maintenue à la pression atmosphérique ou à une pression constante ou variable qui se trouve dans une plage légèrement au-dessus de la pression atmosphérique au moins sur la majeure partie de la durée de l'extrusion de la gaine interne (Si) dans la gaine externe (Sa) déjà appuyée contre la surface de moulage de manchon,
les étapes b1 à 3 étant définies comme suit :
Étape b1 : brièvement avant ou au début de l'extrusion de la gaine interne (Si) dans la gaine externe (Sa) déjà appuyée contre la surface de moulage de manchon, la pression (pi) agissant sur le côté interne de la gaine interne (Si) est augmentée à une pression (pi2) au-dessus de la pression atmosphérique et
Étape b2 : pendant l'extrusion de la gaine interne (Si) dans la gaine externe (Sa) déjà appuyée contre la surface de moulage de manchon, la pression (pi) agissant sur le côté interne de la gaine interne (Si) est maintenue à une pression au-dessus de la pression atmosphérique et
Dans lequel il est prévu
que la pression au-dessus de la pression atmosphérique (pi) agissant, à l'étape b2, sur le côté interne de la gaine interne (Si), est encore une fois nettement augmentée à la fin de la formation du manchon de la gaine interne,
Étape b3 : après la fin de l'extrusion de la gaine interne (Si) dans la gaine externe (Sa) déjà appuyée contre la surface de moulage de manchon ou brièvement avant, la pression (pi) agissant sur le côté interne de la gaine interne (Si) est réduite à la pression atmosphérique ou à une pression au-dessus de la pression atmosphérique.

21. Dispositif selon la revendication 19 ou 20,
**caractérisé en ce que**
au moins un des régulateurs de pression, de préférence les premier et deuxième régulateurs, comprend une soupape de régulation de pression contrôlée électroniquement, de préférence une soupape proportionnelle, permettant de réguler de manière constante et/ou variable une pression au-dessus de la pression atmosphérique et/ou une pression au-dessus de la pression atmosphérique y compris la pression atmosphérique dans l'espace correspondant.

22. Dispositif selon l'une des revendications 19 à 21,
**caractérisé en ce que**
le régulateur de pression comprend une soupape de commutation qui relie, en position ouverte, l'espace correspondant au régulateur de pression avec l'atmosphère.

23. Dispositif selon la revendication 22,
**caractérisé en ce que**
la soupape de commutation et la soupape de régulation de pression contrôlée électroniquement, de préférence la soupape proportionnelle, est reliée avec l'espace correspondant de façon à ce que, lorsque la soupape de commutation est ouverte, une pression atmosphérique est réglée dans l'espace correspondant indépendamment de la position de la soupape proportionnelle.
